# EUROPEAN PATENT SPECIFICATION

(11) **EP 2 153 962 B1**
(45) Date of publication and mention of the grant of the patent: **18.05.2016**
(21) Application number: 08763931.6
(22) Date of filing: 28.05.2008
(51) Int. Cl.: B28D 5/00, B28D 1/24, C03B 33/027, B28D 1/22, B28D 7/00, C03B 33/023, C03B 33/037, C03B 33/10

(54) **MULTI-HEAD MOUNTED SCRIBING DEVICE**
MIT MEHREREN KÖPFEN VERSEHENE RITZVORRICHTUNG
DISPOSITIF DE TRAÇAGE MONTÉ SUR PLUSIEURS TÊTES

(30) Priority: 06.06.2007 JP 2007150809
(43) Date of publication of application: 17.02.2010
(73) Proprietor: Mitsuboshi Diamond Industrial Co., Ltd., Suita-city, Osaka 564-0044 (JP)
(72) Inventor: YAMAMOTO, Masao, Suita-city Osaka 564-0044 (JP); TABATA, Atsushi, Suita-city Osaka 564-0044 (JP); NISHIO, Yoshitaka, Suita-city Osaka 564-0044 (JP)
(74) Representative: TBK
(86) International application number: PCT/JP2008/001331
(87) International publication number: WO 2008/149515

(56) References cited:
- EP-A2- 0 230 642
- WO-A1-2005/118440
- WO-A1-2007/063979
- JP-A- H 071 270
- JP-A- 02 205 445
- JP-A- 07 001 270
- JP-A- 07 237 067
- JP-A- H07 237 067
- JP-A- H11 114 885
- JP-A- 2000 001 326
- JP-A- 2000 001 326
- JP-A- 2000 119 030
- JP-A- 2002 020 133
- JP-A- 2005 001 901
- JP-A- 2005 001 901
- JP-B2- 06 071 344

## Description

The present invention relates to a multi-head mounted scribing device according to the preamble of claim 1, the features of which are known from document JP 2000-119030 A. Such a scribing device is capable of forming a plurality of scribe lines on a brittle material-based substrate simultaneously. The present invention also relates to a tip holder automatic-exchanging system automatically exchanging a tip holder mounted in a scribing device.

Conventionally, in a process of manufacturing a flat panel display (FDP) such as a liquid crystal display panel or a liquid crystal projector substrate, mother glass substrates are bonded together and a resultant substrate is then cut into a plurality of panels each of a predetermined dimension. To cut the brittle material-based substrate such as a mother glass substrate, a scribing step and a breaking step are executed and a scribing device is employed in the scribing step. In a process of manufacturing an FPD, one mother substrate is scribed and a plurality of panel substrates are extracted from the mother substrate by breaking. In relation to this, if the mother substrate is larger in dimension and many panel substrates are to be obtained, a multi-head mounted scribing device having a plurality of scribing heads mounted therein is employed so as to enhance scribing efficiency.

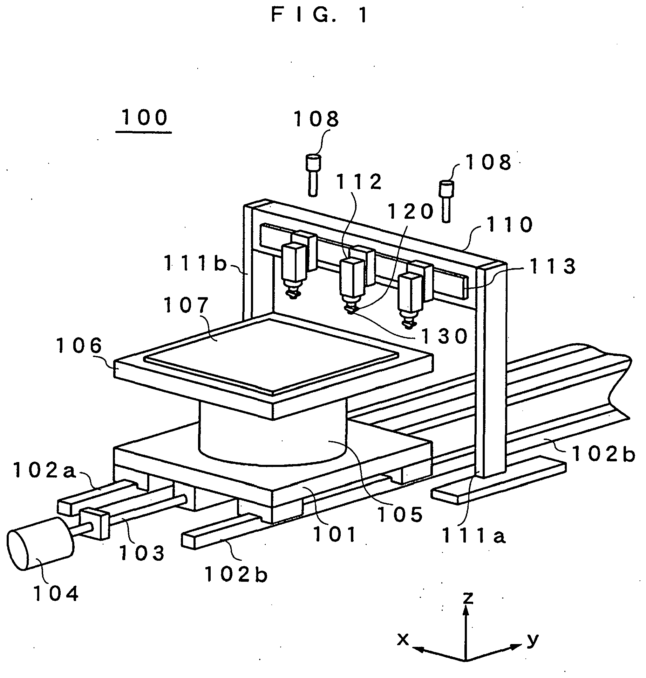

Fig. 1 is a schematic perspective view showing an example of a conventional multi-head mounted scribing device. In a multi-head mounted scribing device 100, a moving carriage 101 is held movably in a y-axis direction along a pair of guide rails 102a and 102b. A ball screw 103 is mated with the moving carriage 101. A motor 104 drives the ball screw 103 to rotate to move the moving carriage 101 in the y-axis direction along the guide rails 102a and 102b. A motor 105 is provided on an upper surface of the moving carriage 101. The motor 105 rotates a table 106 in an xy plane and positions the table 106 at a predetermined angle. A brittle material-based substrate 107 is mounted on the table 106 and held by vacuum attraction means or the like which is not shown. Two CCD cameras 108 picking up alignment marks of the brittle material-based substrate 107 are provided in an upper portion of the scribing device 100.

In the scribing device 100, a bridge 110 is provided to be erected by supports 111a and 111b along an x-axis direction so as to stride over the moving carriage 101 and the table 106 above the moving carriage 101. The bridge 110 has a plurality of scribing heads 112 movable in the x-axis direction along a guide 113. Each scribing head 112 includes a driving source that is mounted therein and that moves the scribing head 112 along the x-axis direction independently. Alternatively, the guide 113 and each scribing head 112 may be, for example, linearly driven so that each scribing head 112 can move independently. A tip holder 130 is attached to a tip end portion of each scribing head 112 via a holder joint 120.

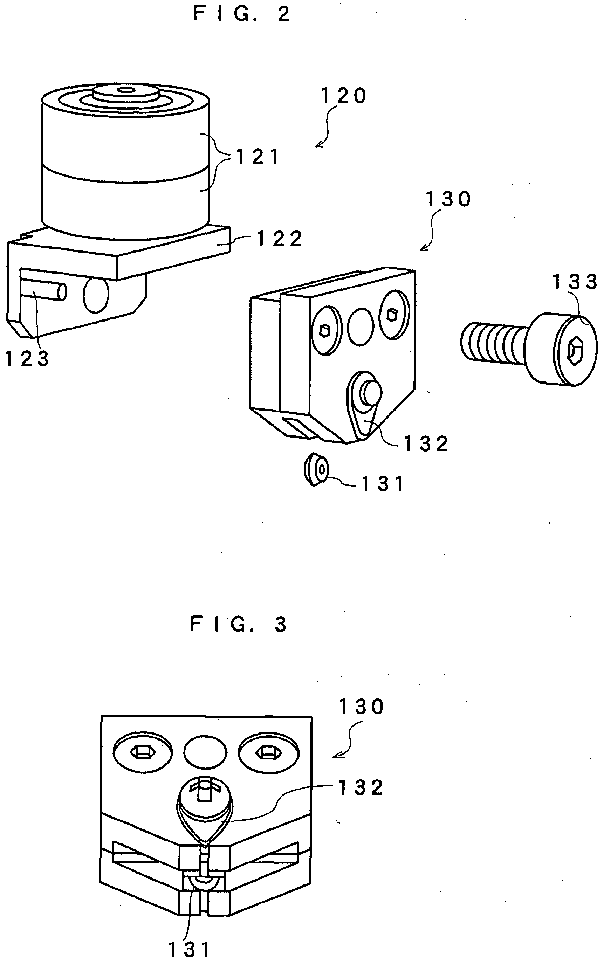

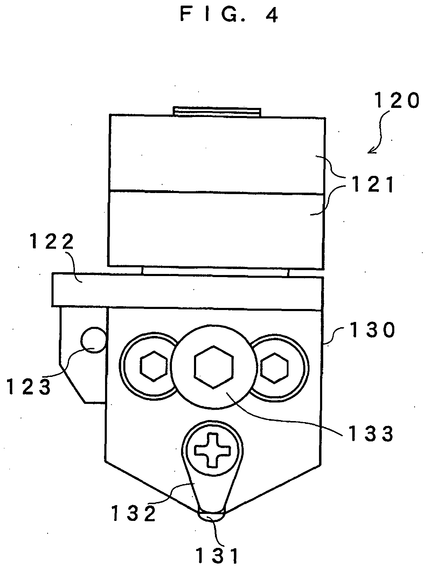

The conventional holder joint and tip holder attached to the scribing head 112 will next be described. As shown in an exploded perspective view of Fig. 2, the holder joint 120 includes a bearing 121 in an upper portion and a holder 122 configured into an L shape in a lower portion thereof. A positioning pin 123 is provided on a side of the holder 122. As shown in Figs. 3 and 4, the tip holder 130 holds a disk shaped wheel tip (hereinafter, simply "tip") 131 rotatably. The tip 131 is rotatably held at the center of the lower end of the tip holder 130 by a pin that is not shown, and a catch 132 prevents detachment of the pin. The tip 131 forms scribing lines on the brittle material-based substrate by rolling while pressure-contacting the brittle material-based substrate. This tip holder 130 is brought into contact with the holder 122, thereby positioning the tip holder 130 with respect to the holder 122 of the holder joint 120. Further, the tip holder 130 is fixed to the holder 122 by a fixing bolt 133. Each scribing head 112 holds the holder joint 120 and the tip holder 130 attached to a lower portion of the scribing head 112 to be vertically movable. Each scribing head 112 includes therein an elevator that makes the holder joint 120 and the tip holder 130 vertically movable, for example, an air cylinder using pneumatic control or a motor-driven elevator driven by a linear motor. The elevator moves the tip 131 to roll on a surface of the brittle material-based substrate while pressure-contacting the tip 131 with the brittle material-based substrate with an appropriate load and to form scribe lines.

The multi-head mounted scribing device 100 includes a plurality of scribing heads. The tip holder is attached to each scribing head. A plurality of tips are used either simultaneously or a part of the tips are used. Alternatively, different types of tips are attached to the scribing heads according to cutting targets, and a part of the tips are selected when being used to scribe the brittle material-based substrate.

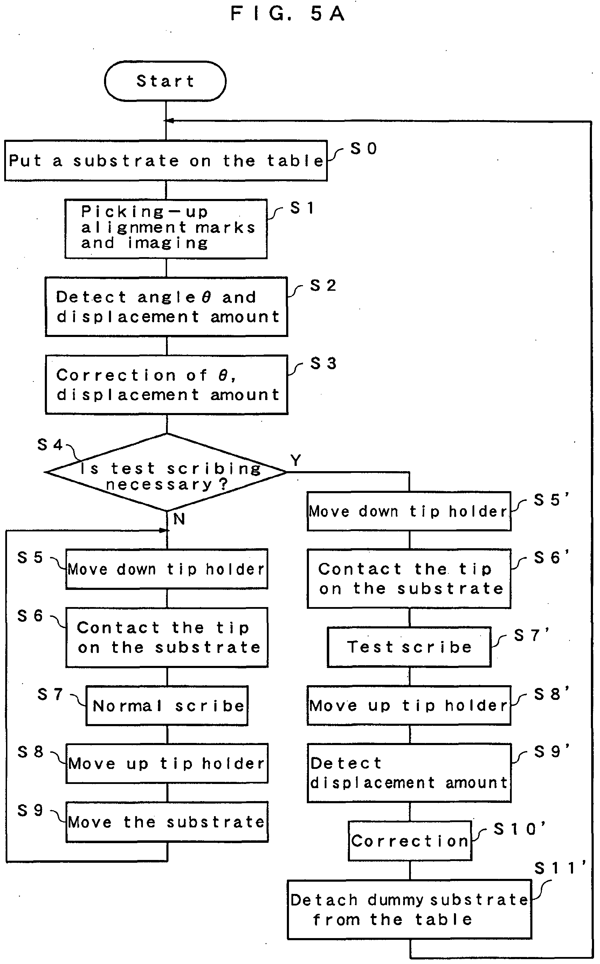

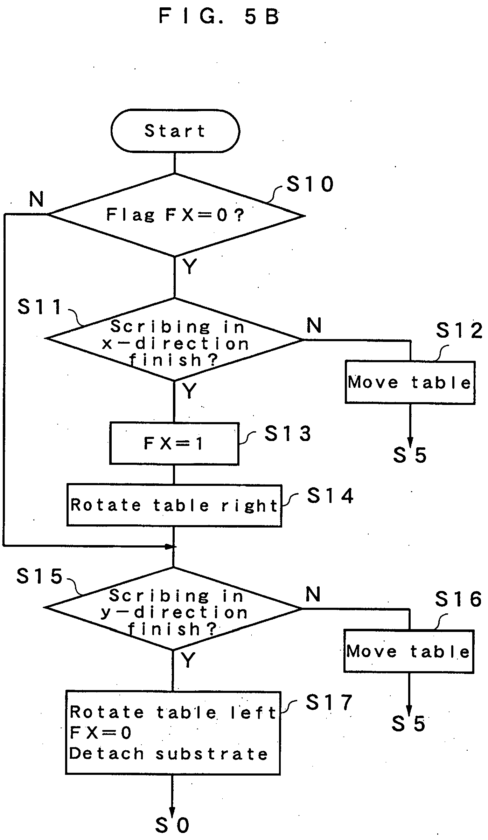

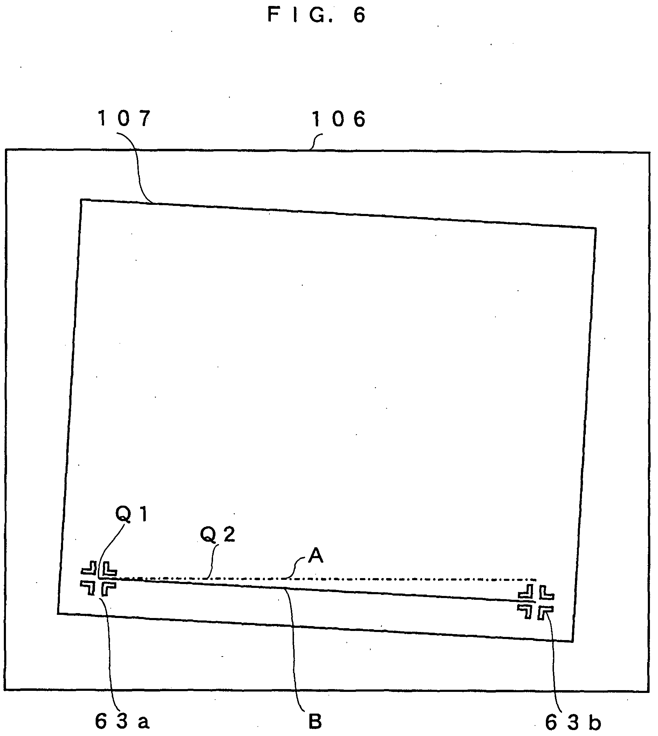

Next, a scribing operation performed by the scribing device completed with electrical and mechanical adjustments necessary for the scribing operation after the scribing device is assembled as the multi-head mounted scribing device will be described. Figs. 5A and 5B are flowcharts showing procedures of this process. Before starting scribing, the brittle material-based substrate 107 is mounted first on the table 106 as shown in Fig. 6, positioned and then attracted and fixed (step S0). Thereafter, to check a positioning status, the scribing device performs an image process by picking up enlarged alignment marks 63a and 63b for positioning at two locations, that is, left and right locations on the substrate using the two CCD cameras 108 installed above the scribing device, respectively (step S1). Since the picked-up enlarged images are displayed on corresponding monitors, respectively, an operator can make accurate positioning of the substrate while checking the picked-up images. In this case, a line connecting the two CCD cameras is defined as a reference line A of the table 106. The scribing device 100 performs an image process and thereby detects an angle (θ) at which the substrate 107 tilts from the reference line A while being mounted and a displacement amount by which the substrate 107 is displaced from an origin position that serves as a reference position of the table 106 while being mounted (step S2). Based on a detection result, the scribing device 100 goes to step S3, in which the scribing device 100 corrects the tilt angle θ of the substrate 107 to 0 by allowing the motor 105 to rotate the table 106. The displacement of the substrate 107 from the origin position can be corrected as follows. As for the y-axis direction, the table 106 is moved in the y-axis direction by as much as an amount corresponding to a y-axis direction component of an amount of the displacement ("displacement amount"). As for the x-axis direction, the position of each scribing head 112 is moved by as much as an amount corresponding to an x-axis direction component of the displacement amount. As another correction method, the displacement amount is divided into an x-axis component and a y-axis component, and the scribing device corrects values of the respective axis components of position data on a starting position of the scribing operation. By displacing the scribing starting position in this way, an equivalent result can be obtained.

Whenever the scribing target substrate is exchanged by another substrate, the operator needs to execute the displacement amount correction operation stated above prior to starting scribing. Upon completion of the correction operation, the scribing device 100 starts a scribing operation at a desired position. The scribing device 100 moves down the tip holders, causes the tips to roll while abutting the tips on the substrate, and performs normal scribing (steps S5 to S7). After forming the scribe lines, the scribing device 100 moves up the tip holders (step S8), moves the substrate relatively (step S9), and returns to step S5.

Moving of the substrate shown in step S9 will next be described in detail referring to Fig. 5B. First, the scribing device 100 determines whether a flag FX that is control data in a control program is 0 (step S10). This flag FX is on during rotation of the table and set to 0 after being initialized. If the flag FX is 0, the scribing device 100 goes to step S11 in which it is determined whether the scribing device 100 finishes scribing the substrate 107 in the x-axis direction. If the scribing device 100 does not finish scribing the substrate 107 in the x-axis direction, the scribing device 100 relatively moves the substrate by moving the table 106 (step S12) and returns to step S5 in and after which the scribing device 100 repeatedly performs the same process. By doing so, the scribing device 100 repeats this loop and can finish scribing the substrate 107 in the x-axis direction. If the scribing device 100 finishes scribing the substrate 107 in the x-axis direction, the scribing device 100 goes to step S13, in which the scribing device 100 sets the flag FX to 1. In step S14, the scribing device 100 moves the table 106 to rotate the table 106 right by 90 degrees. In step S15, the scribing device 100 determines whether the scribing device 100 finishes scribing the substrate 107 in the y-axis direction. If the scribing device 100 does not finish scribing the substrate 107, the scribing device 100 goes to step S16, in which the scribing device 100 moves the table 106 and returns to step S5. If the scribing device 100 finishes scribing the substrate 107 in the x-axis direction, the flag FX is turned on, and thereby the scribing device 100 moves to step S15 from step S10 and determines whether the scribing device 100 finishes the scribing in the y-axis direction. If the scribing device 100 does not finish the scribing in the y-axis direction, the scribing device 100 translates the substrate in the y-axis direction relatively by as much as a necessary moving amount (step S16). Thereafter, the scribing device 100 returns again to step S5, and repeats the same scribing operation. Thereafter, if determining that the scribing device 100 completely finishes forming scribe lines in the y-axis direction in step S15, the scribing device 100 rotates the table left by 90 degrees and finishes the scribing operation. The scribing device 100 resets the flag FX. The substrate is released and detached from the table 106 (step S17). Next time another substrate is mounted on the table, the scribing device 100 performs the scribing operation by the same procedures.

If a newly manufactured multi-head mounted scribing device 100 is used while attaching the holder joints 120 to the device 100 or if one or some of the tip holders 130, scribing heads 112 and holder joints 120 are exchanged for adjustment or repair, it is necessary to perform a displacement amount correction operation by a following method. In this case, it is assumed that a next adjustment is already finished for brevity of description. That is, it is assumed that a central coordinate of the image picked up by one of the two CCD cameras is adjusted to coincide with an origin position necessary for forming scribe lines, and that scribe lines formed by the tips after attachment of such components as the tip holders are adjusted in advance so as to be in parallel to a reference line in the y-axis direction of the table.

Moreover, in the description of the operation performed by the conventional multi-head mounted scribing device in the specification of the present application, it is assumed that each tip 131 is rotatable about the bearing 121 provided in the holder joint 120 and can form a scribe line in whichever moving direction. Namely, it is assumed that the tip 131 can form a scribe line with no difficulty in the moving direction, whether the x-axis direction or the y-axis direction.

It is further assumed that, if one of the tip holders 130, scribing heads 112, holder joints 120 or the like are exchanged, the other scribing heads 112 are put on standby at appropriate retreat positions on either a right end or left end of the bridge so that the other scribing heads 112 do not limit movement of the exchanging target scribing head 112.

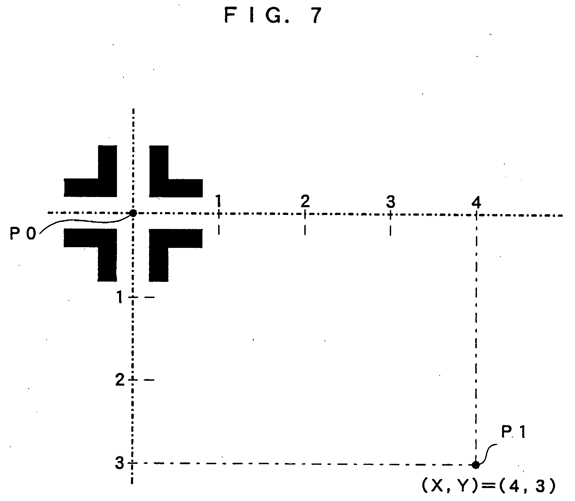

First, it is necessary to perform test scribing (step S4) so as to accurately detect the displacement between the origin position of a driver system of the scribing device 100 and the starting position at which each tip 131 actually starts forming a scribe line on the substrate. For performing the test scribing, the operator mounts a dummy substrate other than the normal mother substrate on the table 106 and executes preprocess from steps S0 to S3. Fig. 7 is a pattern diagram showing a positional relationship between a scribe line formed on the dummy substrate in a test and a central coordinate P0 of the alignment mark of an image picked up by the CCD camera. As long as an offset amount of each of the scribing heads 112, holder joints 120 and tip holders 130 is corrected and cancelled, the scribing device 100 can start scribing the dummy substrate from the central coordinate P0.

However, electrical and mechanical errors are present and values of the errors differ among respective assembly components, and due to this, the scribing device cannot start scribing the dummy substrate from the central coordinate P0 unless re-measuring amounts of errors after attachment and finishes performing necessary correction process. Therefore, the operator moves down one of the tip holders 130 and abuts the corresponding tip on the dummy substrate (steps S5' and S6'). The scribing device performs a test scribing on the dummy substrate to form one scribe line (S7'). Thereafter, the operator moves up the tip holder (S8') and measures a displacement amount (S9'). It is assumed herein that a scribing starting position (X, Y) of the tip is a position P1 (X, Y) = (4, 3) as shown in Fig. 7. The operator can measure this position using the CCD camera 108.

Next, the operator measures a displacement amount from the position P1 to the central coordinate P0 (S9'). Since this displacement amount serves as a value to be cancelled as an offset, the operator performs a correction process using this value as a correction value (S10'). The operator detaches the dummy substrate from the table and finishes the correction process (S11'). Back to step S0, the operator repeats the same process. By doing so, the scribing device 100 can start scribing the substrate 107 from the central coordinate P0 in normal scribing in and after step S5 shown in Fig. 5A.

After performing the correction process as stated above, the scribing device 100 performs the preprocess from steps S1 to S3 whenever a scribing target substrate is exchanged. By doing so, a position of each scribe line formed on the brittle material-based substrate 107 accurately coincides with that of a planned line (for example, a line B shown in Fig. 6). The scribing device 100 sequentially changes the scribing starting position on the same substrate 107 and repeats the scribing operation (steps S5 to S8).

It is necessary to regularly exchange each tip by another tip since the tip is worn away and performance of the tip is deteriorated when the tip scribes the brittle material-based substrate by a predetermined length (Patent Document 1). If one tip that is a consumable article is to be exchanged by another in the conventional scribing device, the operator first detaches the corresponding tip holder 130 from the scribing head 112. Next, the operator detaches the worn tip 131 from the detached tip holder 130 and attaches a new tip to the tip holder 130. Thereafter, the operator reattaches the tip holder 130 to the scribing head 130, thus finishing an exchanging operation. Due to this, no matter which of the tip itself, the tip holder, and the scribing head is exchanged, an error (offset) is generated on an attachment position of the tip. Due to this, it is necessary to perform the test scribing and a later correction process (steps S5' to S11') to cancel the offset.

In this way, the operator corrects an offset amount accompanying exchange of a peripheral component of each scribing head. Subsequently, the scribing device 100 performs the preprocess from steps S0 to S3 on the normal mother substrate, and repeatedly performs a series of scribing related operations from steps S5 to S9, thereby making it possible to form a necessary number of scribe lines on the substrate.

Other than the scribing device in which each scribing head moves in the x-axis direction and the table moves in the y-axis direction and rotates, shown here, there is also known a scribing device in which a table moves in x-axis and y-axis directions and rotates (Patent Document 2). There is also known a scribing device in which a table moves in x-axis and y-axis directions but which does not include a rotation mechanism. There is further known a scribing device of such a type that a table is fixed and that each scribing head moves in x-axis and y-axis directions (Patent Document 3).

As a modification of the scribing device shown in Fig. 1, there is known a scribing device of such a type that the brittle material-based substrate 107 is mounted on the moving carriage 101 without arranging the rotary table on the moving carriage 101 (Device type 1). As another modification, there is known a scribing device of such a type that the bridge 100 includes a driving mechanism moving both the supports 111a and 111b in the y-axis direction (Device type 2, see, for example, Patent Document 4). Among the above-stated scribing devices using various device configurations, it is necessary to make a following adjustment operation with respect to the device that has a device configuration in which the table or a part corresponding to the table on which a workpiece substrate is to be mounted does not rotate. Necessity of adjustment will be described while taking an instance of a single-head mounted scribing device employing only one scribing head as an example.

That is, the scribing device executes only the correction process on the displacement amount of the substrate 107 in the S3 since the scribing device cannot correct the tilt angle θ of the substrate 107 detected in step S2 of Fig. 5A. Such a single-head mounted scribing device in which the table does not rotate and only one scribing head is mounted on, the scribing executes a scribing operation based on a linear interpolation method described referring to Fig. 6 in place of the correction of θ. Namely, assuming that the scribing device forms a normal scribe line at a position of the line B, if the scribing device moves only the scribing head 112 simply in the x-axis direction, only the line A is obtained. Therefore, this scribing device moves the scribing head in the x-axis direction and, at the same time, moves the table 106 if the device is the device type 1 or moves the bridge 110 if the device is the device type 2. By doing so, the tilted scribe line B can be formed. A moving amount of movements made in parallel depends on the tilt angle θ. The tilted scribe line can be realized by sharing movements corresponding to a bottom and a height of a triangle formed by the tilt angle θ between the scribing head 112 and the table 106 (or bridge 110). This is realized by repeating minor stepped linear movements in two directions.
Patent Document 1: Japanese Patent No. 3074143 (JP 3 074143 B2);
Patent Document 2: Japanese Unexamined Patent Publication No. 2000-119030 (JP 2000-119030 A);
Patent Document 3: Japanese Unexamined Patent Publication No. 2000-086262 (JP 2000-086262 A); and
Patent Document 4: Japanese Unexamined Patent Publication No. 2000-264657 (JP 2000-264657 A).
Document JP 2000-119030 A is considered closest prior art.

If the tip attached to the conventional tip holder is exchanged by another tip, the operator loosens the fixing bolt 133 and detaches the tip holder 130 from the holder joint 120. The operator loosens a bolt of the catch 132, shifts the catch 132 from a pinhole, pulls out the pin, and takes out the tip 131. After exchanging the tip 131 by a new tip, the operator inserts the pin by a similar process, attaches the tip to the tip holder 130, and attaches the tip holder 130 to the holder joint 120 as shown in Fig. 4. The operator then attaches the holder joint 120 to the scribing head 112.

If the tip is exchanged by the new tip as stated above, it is necessary to execute the operation from S0 to S3 and S5' to S11' shown in Fig. 5A. That is, it is necessary to temporarily perform a test scribe using the dummy substrate to correct an offset accompanying this exchange and perform an operation for calculating an offset amount and correcting the offset amount. It disadvantageously takes labor to execute such processes.

Furthermore, while tips differ in size depending on purposes, in the case where the tips are used to scribe a composite substrate of a liquid crystal display panel, the tips are about 2.5 mm in diameter and pins are about 0.5 mm in diameter. These tips and pins are too small and difficult to deal with. Due to this, according to a conventional technique, it disadvantageously takes lots of time to perform tip exchanging operation. Further, in a panel-working plant where various tips are used while being attached to various devices, tips of different types are possibly and erroneously attached to a device. In that case, a scribing condition changes and normal and stable scribing cannot be performed on a target substrate. However, a cause for that error is disadvantageously difficult to locate. Moreover, if each tip holder is fixed to the holder joint by the fixing bolt, an attachment position of the tip is slightly shifted depending on how to fix the tip holder. Due to this, after attachment, positions where the tips form scribe lines are disadvantageously made irregular.

Further, the multi-head mounted scribing device has a problem that it takes labor and time to manually manage a plurality of tips, to grasp a wear period of a cutting edge of each tip according to a running distance, and to exchange one tip by another tip. In some cases, tips are exchanged according to a cutting target, in which cases it is necessary to select tips according to the cutting target and to exchange them by other tips, and this disadvantageously makes management of tips complicated.

Moreover, the multi-head mounted scribing head needs to use the rotatable table on which the workpiece substrate is mounted. More workpiece substrates are increasingly used for FPD and the substrates are made increasingly larger in dimensions. If the substrates are made larger in dimension, working tables are made larger accordingly, accordingly it is difficult to accurately produce tables ensuring predetermined flatness at a large area. Besides, it is disadvantageously difficult to ensure high rotational angle resolution of the table that rotates due to dimensional accuracy of the worked panel.

As stated above, the scribing device having the single scribing head mounted therein and using the working table that does not rotate can form desired scribe lines by the linear interpolation method. However, the device having a plurality of scribing head mounted therein and using the working table that does not rotate has the following problems once a workpiece substrate is mounted on the working table while being tilted even after cancelling an attachment error of each head. It is disadvantageously necessary to adjust start of scribing using the tip attached to a lower portion of the tip holder of each scribing head. It is impossible to form accurate scribe lines without the adjustment.

The situation will be described in more detail referring to Fig. 6. In Fig. 6, if the scribing starting position of a leftmost tip on the sheet of Fig. 6 is adjusted to Q1 (a central position of the left alignment mark 63a) by linear movement of the working table, the tip can form a scribe line along B by the linear interpolation method. However, the scribing starting position of the adjacent tip attached to the scribing head is on the line A, for example, Q2 and cannot form a scribe line superimposed on the line B even by the linear interpolation method. This means that all the tips have different formation starting positions in the y-axis direction on the substrate for scribe lines formed by a plurality of scribing heads if the substrate is mounted on the table while being tilted. The substrate is normally mounted on the working table while being tilted to a varying degree. Accordingly, if the conventional multi-head mounted scribing device is employed while the device has a device configuration in which the table does not rotate, then starting positions of scribe lines formed by the tips of the respective scribing heads change and a serious quality-related problem occurs.

The present invention has been made with attention paid to the problems of the conventional multi-head mounted scribing device. It is the object of the present invention to make it possible to mount a plurality of scribing heads on whichever scribing device, having a device configuration in which a table rotates or a device having a device configuration in which a table does not rotate, and to use a tip holder integral with a tip, to hold offset data in the tip holder in the form of a code, and to make it possible to automatically exchange one tip by another tip, thereby overcoming botheration of adjustment operation following the tip exchange.

The object of the invention is achieved by a multi-head mounted scribing device according to claim 1. Advantageous embodiments are carried out according to the dependent claims.

To solve the problem, the multi-head mounted scribing device of the present invention mounting therein a plurality of scribing heads, comprising: installation means (e. g. a table, conveyer or like) on which a brittle material-based substrate is installed; a plurality of scribing heads provided to face the brittle material-based substrate on said installation means; a holder joint provided on a tip end of each of said scribing heads; a tip holder having detachably attached to said holder joint at one end thereof, including a wheel tip for scribe line formation (scribing wheel), rotatably attached at other end thereof the tip holder, and including code recording offset data for scribing and a characteristic management number; and a relative mover moving each of said scribing heads and said brittle material-based substrate relatively in a plane along a plane of the brittle material-based substrate, and relatively moving each of said scribing heads at least in one of x-axis and y-axis directions based on the offset data held by said tip holder before scribing, thereby correcting an offset of each of said scribing heads.

In the multi-head mounted scribing device, said relative mover may include a mover moving said installation means in the y-axis direction; and a mover moving each of said scribing heads in the x-axis and y-axis directions.

Said relative mover may move said installation means in the x-axis and y-axis directions.

Said relative mover may include a mover moving said installation means in the y-axis direction; and a mover moving each of said scribing heads in the x-axis direction.

Said relative mover further may include a rotator rotating said installation means in the plane of the brittle material-based substrate.

Said relative mover may include a mover moving said installation means in the y-axis direction; and a mover moving each of said scribing heads in the x-axis and y-axis directions.

For example, in case the installation means is a conveyer, the brittle material-based substrate installed on the conveyer can be moved by the conveyer in the X-axis or Y-axis direction without moving the conveyer itself.

Said code may be a two-dimensional code.

Said code may include data indicating a characteristic identification number and a type of the wheel tip.

To solve the problem, the tip holder automatic-exchanging system of the present invention used for the above-mentioned multi-head scribing device and automatically exchanging a tip holder, wherein said tip holder automatic-exchanging system comprises: a tip stocker holding a plurality of exchangeable tip holders; a code reader reading the code recorded in each of the tip holders held by said tip stocker; a tip exchanging robot attaching a desired tip holder to the holder joint of said multi-head scribing device based on the code read by said code reader, and returning the tip holder attached to the holder joint of said multi-head scribing device to said tip stocker; and a controller holding the characteristic management number and management data on each of the plurality of tip holders, selecting one of the tip holders held by said tip stocker, and attaching the selected tip holder to the holder joint of said scribing device via said tip exchanging robot according to a scribing target.

In the tip holder automatic-exchanging system, the management data may provide in said controller holds data including a running distance of each of the wheel tips.

Said controller may exchange the tip holder by another tip holder when the running distance of the wheel tip of the tip holder exceeds a predetermined value.

The present invention having such characteristics can provide a scribing device configured so that installation means (such as a working table and a conveyor) for a substrate having greatly enlarged dimensions does not rotate as a multi-head mounted scribing device mounting therein a plurality of scribing heads. Furthermore, the multi-head mounted scribing device can facilitate exchanging and managing tips. Moreover, since each tip holder holds offset data on a tip as a code, correction data can be advantageously set to the scribing device by reading the code and tip exchange can be advantageously automated.

### BRIEF DESCRIPTION OF DRAWINGS

[Fig. 1] Fig. 1 is a perspective view showing an overall configuration of a conventional multi-head mounted scribing device.
[Fig. 2] Fig. 2 is a perspective view showing a conventional holder joint and tip holder.
[Fig. 3] Fig. 3 is a perspective view showing the conventional tip holder.
[Fig. 4] Fig. 4 shows a state of attaching the conventional tip holder to the conventional holder joint.
[Fig. 5A] Fig. 5A is a flowchart showing a conventional scribing process.
[Fig. 5B] Fig. 5B is a flowchart showing a substrate moving process in the conventional scribing process.
[Fig. 6] Fig. 6 shows a state in which CCD cameras pick up alignment marks.
[Fig. 7] Fig. 7 shows a relationship between an alignment mark and a tip scribing starting position.
[Fig. 8] Fig. 8 is a perspective view showing an overall configuration of a multi-head mounted scribing device according to an embodiment 1 of the present invention.
[Fig. 9] Fig. 9 shows a configuration of a tip holder according to the embodiment 1 of the present invention.
[Fig. 10] Fig. 10 is a perspective view of the tip holder according to the embodiment 1 of the present invention.
[Fig. 11] Fig. 11 shows a holder joint according to the embodiment 1 of the present invention.
[Fig. 12] Fig. 12 is a perspective view showing insertion of the tip holder into the holder joint according to the embodiment 1 of the present invention.
[Fig. 13] Fig. 13 is a partial cross-sectional view of the holder joint showing a state of insertion of the tip holder into the holder joint.
[Fig. 14] Fig. 14 shows a state of attaching the holder joint to a scribing head.
[Fig. 15] Fig. 15 is a perspective view showing a front face of the multi-head mounted scribing device according to the embodiment 1 of the present invention.
[Fig. 16] Fig. 16 is a schematic plan view of the multi-head mounted scribing device according to the embodiment 1 of the present invention.
[Fig. 17] Fig. 17 is a block diagram showing a configuration of a control system of the multi-head mounted scribing device according to the embodiment 1 of the present invention.
[Fig. 18] Fig. 18 shows a management table of the tip holder.
[Fig. 19A] Fig. 19A is a flowchart showing procedures of a scribing process performed by the multi-head mounted scribing device according to the embodiment 1 of the present invention.
[Fig. 19B] Fig. 19B is a flowchart showing procedures of the scribing process performed by the multi-head mounted scribing device according to the embodiment 1 of the present invention.
[Fig. 20] Fig. 20 is a flowchart showing an automatic-exchanging process according to the embodiment 1 of the present invention.
[Fig. 21] Fig. 21 is a flowchart showing a process performed if a tip is exchanged by another tip at start of operation.
[Fig. 22] Fig. 22 shows a relationship among the alignment mark, the tip scribing starting position, and offset data.
[Fig. 23A] Fig. 23A is a schematic pattern diagram showing a process for writing two-dimensional data to the tip holder.
[Fig. 23B] Fig. 23B is a schematic pattern diagram showing a process for reading two-dimensional data from the tip holder.
[Fig. 24] Fig. 24 is a perspective view showing an overall configuration of a multi-head mounted scribing device according to an embodiment 2 of the present invention.
[Fig. 25A] Fig. 25A is a perspective view showing a slide head used to be attached to a scribing head of the multi-head mounted scribing device according to the embodiment 2 of the present invention.
[Fig. 25B] Fig. 25B is a side view showing the slide head used to be attached to the scribing head of the multi-head mounted scribing device according to the embodiment 2 of the present invention.
[Fig. 25C] Fig. 25C is a perspective view showing the scribing head of the multi-head mounted scribing device according to the embodiment 2 of the present invention.
[Fig. 26] Fig. 26 is a perspective view showing an operating state of the multi-head mounted scribing device according to the embodiment 2 of the present invention.

### Description of Reference Numerals

- 1: Multi-head mounted scribing device
- 10: Tip holder
- 11a, 11b, 16b: Flat portion
- 12: Notch
- 13: Pin groove
- 14: Tip
- 15: Pin
- 16: Attachment
- 16a: Inclined portion
- 17: Two-dimensional code
- 20: Holder joint
- 21a, 21b: Bearing
- 22: Holder
- 23: Opening
- 24: Magnet
- 25: Parallel pin
- 31: Tip stocker
- 32: Code reader
- 33: Robot
- 40: Controller
- 41: Image processer
- 42: Controller
- 43: Correction value input part
- 44: X motor driver
- 45: Y motor driver
- 46: Rotation motor driver
- 47: Tip holder elevation driver
- 48: Monitor
- 49: To-be-used data holder
- 49a: Management table
- 50: Scribing head
- 71: Linear slider
- 72: Connecting plate
- 73: Slide head
- 74: Scribing head

### BEST MODE FOR CARRYING OUT THE PRESENT INVENTION

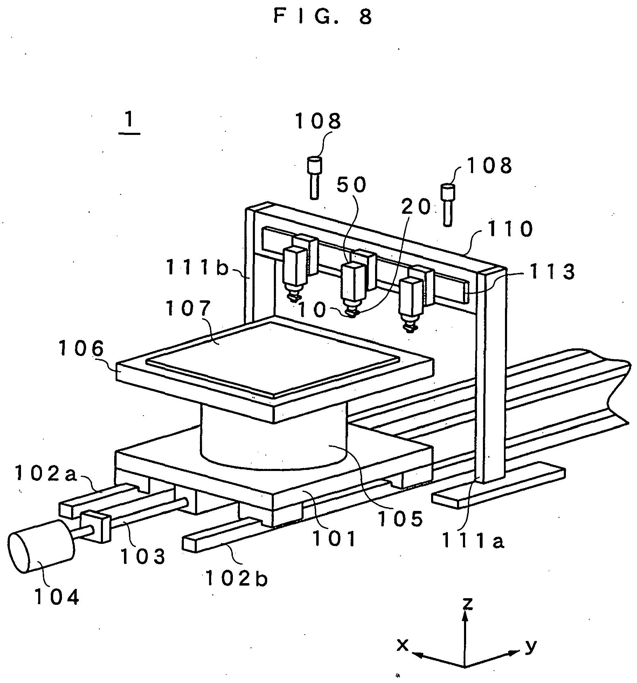

A multi-head mounted scribing device and a tip holder automatic-exchanging system used for this scribing device according to an embodiment 1 of the present invention is described. The tip holder automatic-exchanging system is configured to include not only the multi-head mounted scribing device but also a tip stocker holding tips, a code reader, an automatic-exchanging robot, and a controller controlling these constituent elements. The multi-head mounted scribing device that is a main constituent element of the tip holder automatic-exchanging system will first be described. Fig. 8 is a perspective view showing the multi-head mounted scribing device. In this multi-head mounted scribing device, identical parts to those according to the conventional examples are denoted by identical reference numerals, respectively. A multi-head mounted scribing device 1 according to the present embodiment includes a moving carriage 101 that is movably held in a y-axis direction along a pair of guide rails 102a and 102b. A ball screw 103 is mated with the moving carriage 101. A motor 104 drives the ball screw 103 to rotate and to move the moving carriage 101 in the y-axis direction along the guide rails 102a and 102b. A motor 105 is provided on an upper surface of the moving carriage 101. The motor 105 rotates a table 106 in an xy plane and positions the table 106 at a predetermined angle. A brittle material-based substrate 107 is mounted on the table 106 and held by vacuum attraction means or the like which is not shown. Two CCD cameras 108 picking up alignment marks of the brittle material-based substrate 107 are provided in an upper portion of the scribing device 1.

In the scribing device 1, a bridge 110 is provided to be erected by supports 111a and 111b along an x-axis direction so as to stride over the moving carriage 101 and the table 106 above the moving carriage 101. A plurality of scribing heads 50 are movable in the x-axis direction along a guide 113 provided on the bridge 110. Each scribing head 50 includes a motor that is a driving source mounted therein and that moves the scribing head 50 along the x-axis direction independently. Alternatively, the guide 113 and each scribing head 50 may be linearly driven so that each scribing head 50 can move independently. A tip holder 10, to be described later, is attached to a tip end portion of each scribing head 50 via a holder joint 20. In this case, the motor 104, guide rails 102a and 102b, and ball screw 103 serve as a mover moving the table in the y-axis direction. The bridge 110, supports 111a and 111b, and guide 113 serve as a mover moving the scribing heads in the x-axis direction. The motor 105 serves as a rotator rotating the table. The movers and the rotator constitute a relative mover.

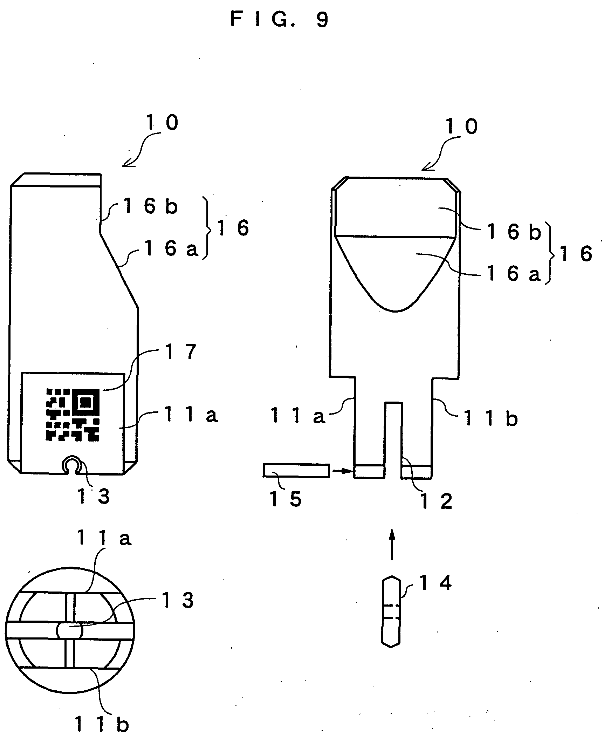

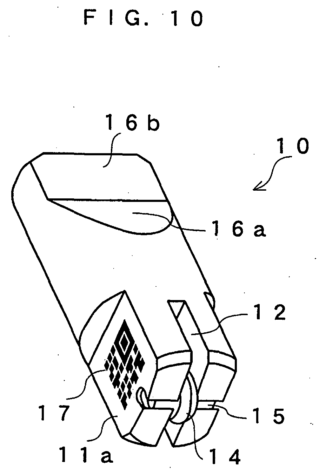

A configuration of the tip holder 10 attached to each scribing head according to the present embodiment will next be described. Fig. 9 shows the tip holder according to the present embodiment and Fig. 10 is a perspective view of the tip holder. As shown in these figures, the tip holder 10 is a generally cylindrical member and generally square flat portions 11a and 11b are provided on one end of the tip holder 10 in parallel to a central axis. The tip holder 10 includes a notch 12 along the central axis between the flat portions, and a pin groove 13 on a lower end of each of the flat portions 11a and 11b in a direction perpendicular to a surface of each of the flat portions 11a and 11b. A tip 14 is of a disk shape having, for example, a wheel diameter of 2.5 mm and a thickness of about 0.5 mm, has a circumferential cross-section formed into a conical shape, and has a through-hole provided at the center of the tip 14. The tip 14 is rotatably held by penetrating a pin 15 into the through hole at the center via the pin groove 13. After the tip 14 is held by the pin 15, the tip as well as the tip holder is exchanged without detaching the tip even if it is required to exchange the tip. A positioning attachment 16 is provided on the other end of the tip holder 10. The attachment 16 is formed by cutting the tip holder 10 and includes an inclined portion 16a and a flat portion 16b. The flat portion 16b is parallel to an axis of the tip holder and perpendicular to the lower flat portions 11a and 11b. A two-dimensional code 17 is printed on the flat portion 11a as described later. A part of an upper portion of the tip holder 10 is made of magnetic metal.

The scribing head 50 includes therein an elevator that makes the tip holder 10 including the tip vertically movable, for example, an air-cylinder using pneumatic control or a motor-driven elevator driven by a linear motor. The scribing head 50 causes the elevator to move the tip 14 to roll on a surface of the brittle material-based substrate while pressure-contacting the tip 14 with the brittle material-based substrate with an appropriate load to form scribe lines.

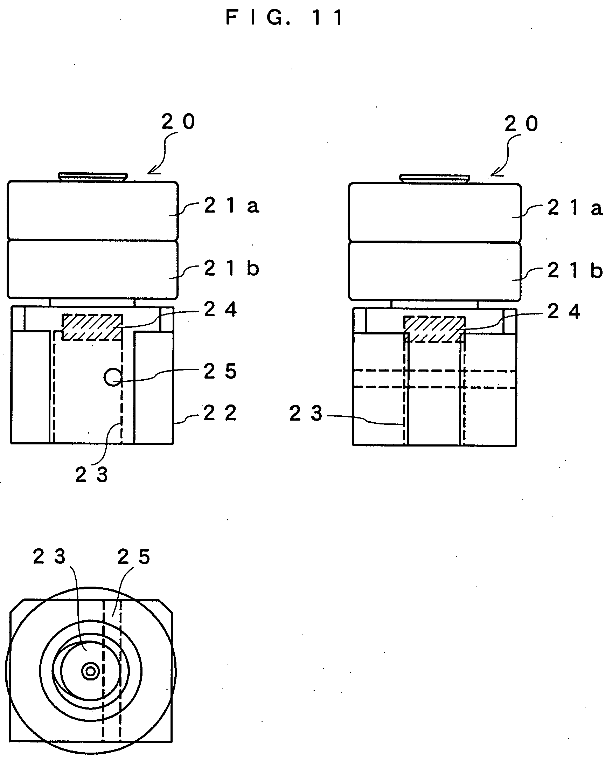

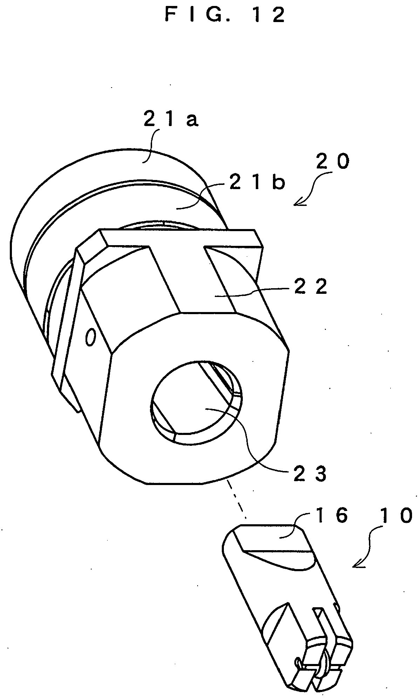

A holder joint 20 will next be described. Fig. 11 shows the holder joint and Fig. 12 is a perspective view showing a state of inserting the tip holder 10 into this holder joint 20. As shown in these figures, the holder joint 20 includes bearings 21a and 21b provided in an upper portion and a holder 22 provided in a lower portion and holding the tip holder. A circular opening 23 is formed in the holder 22 of the holder joint 20 and a magnet 24 is buried inside the opening 23 as shown in the figure. A parallel pin 25 perpendicular to a central axis of the holder joint 20 is provided in this opening 23 at a position away from a central axis. The parallel pin 25 contacts with the inclined portion 16a of the tip holder 10 and positions the tip holder 10.

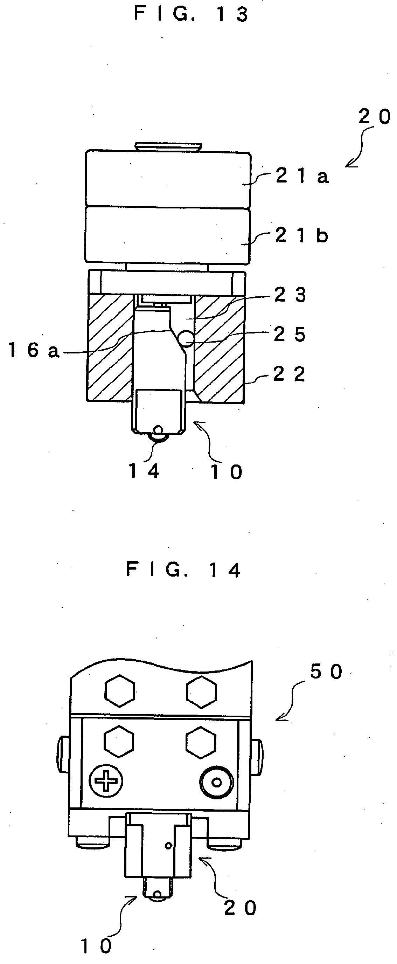

If this tip holder 10 is attached to the holder joint 20, the tip holder 10 is inserted into the opening 23 of the holder joint from the attachment 16 as shown in Fig. 12. By doing so, the magnet 24 attracts a tip end portion of the tip holder 10, the inclined portion 16a contacts with the parallel pin 25, and the tip holder 10 is fixedly positioned. Fig. 13 is a partial cross-sectional view showing a state of attaching the tip holder 10. Fig. 14 shows a part of the scribing head 50 to which the holder joint 20 is attached. Since only the magnet 24 attracts the tip holder 10, it is quite easy to attach the tip holder 10 and the tip holder 10 is fixed to a predetermined position. Even during exchange, the tip holder 10 can be easily detached only by being pulled, thus facilitating attachment and detachment.

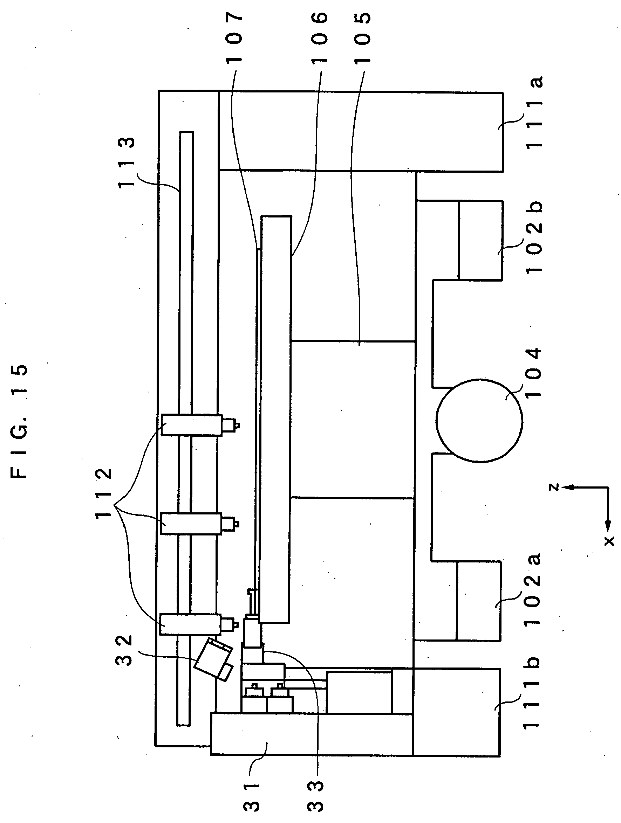

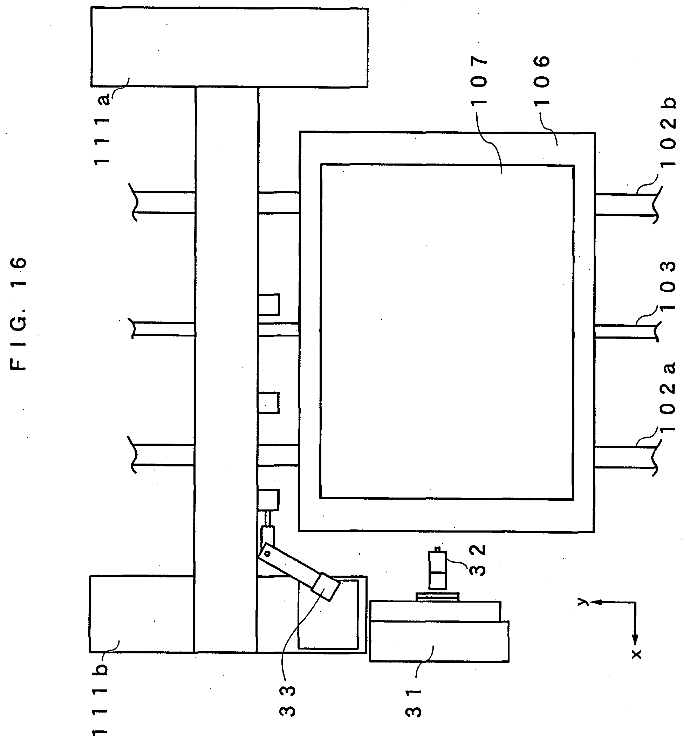

Meanwhile, Figs. 15 and 16 are a schematic front view and a schematic plan view showing other constituent elements of the tip holder automatic-exchanging system according to the present embodiment, respectively. As shown in the figures, a tip stocker 31 holding many tip holders is provided on a side of the table 106. The tip stocker 31 is fixed and configured so that a surface of each tip holder on which surface the two-dimensional code 17 is recorded is exposed to outside and so that a code reader 32 can detect the two-dimensional code 17 from outside. The code reader 32 is attached to, for example, an attachment pillar (not shown in Figs. 15 and 16) provided near the bridge 110, and can read data on each tip holder to follow movement of the table 106. Further, a robot 33 for tip exchange is provided on the support 111b. The robot 33 is a tip exchanging robot that takes out the tip holder of the scribing head 50 at an exchange position and returns the tip holder to the tip stocker 31 or that attaches the tip holder selected and taken out from the tip stocker 31 to the scribing head 50. An output from the code reader 32 is inputted to a controller to be described later, and the robot 33 operates based on an instruction from the controller.

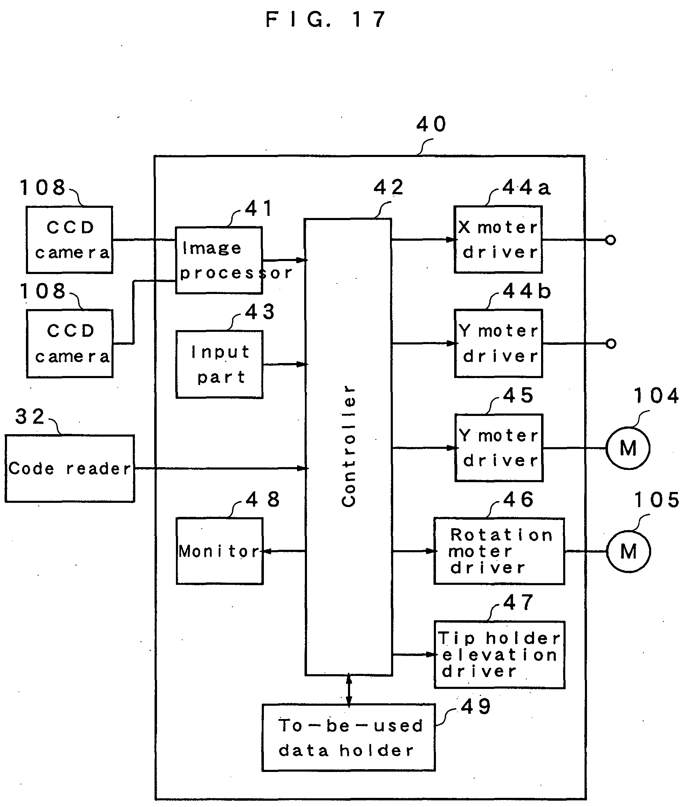

A configuration of the controller of the scribing device 1 according to the present embodiment will next be described using a block diagram. Fig. 17 is a block diagram of a controller 40 of the scribing device 1. In Fig. 17, outputs from the two CCD cameras 108 are supplied to a controller 42 via an image processor 41 of the controller 40. Further, a unit correction value and a tip holder selection instruction are supplied to the controller 42 via an input part 43. The controller 42 supplies data to an X motor driver 44a and Y motor drivers 44b and 45 so as to cancel offsets in X and Y directions. The X motor driver 44a and the Y motor driver 44b drive an X-direction driving motor and a Y-direction driving motor of each scribing head 50, respectively, and the Y motor driver 45 directly drives the motor 104 to move the brittle material-based substrate 107 on the table 106 in the Y-axis direction. A rotation motor driver 46 drives the motor 105 to rotate the brittle material-based substrate 107 on the table 106 and cancels an angle offset if the angle offset is present. Moreover, a tip holder elevation driver 47 and monitor 48 are connected to the controller 42. The tip holder elevation driver 47 drives the tip holder to pressure-contact the tip 14 with the surface of the brittle material-based substrate with an appropriate load when the tip 14 rolls.

The code reader 32 and robot 33 are further connected to the controller 40 of the scribing device. The code reader 32 reads data on an offset value of the tip holder located at a two-dimensional code read position to follow movement of the table 106. The robot 33 exchanges the tip holder by another tip holder based on control of the controller 42. Moreover, a to-be-used data holder 49 holding a management table of each tip holder is provided in the controller 40.

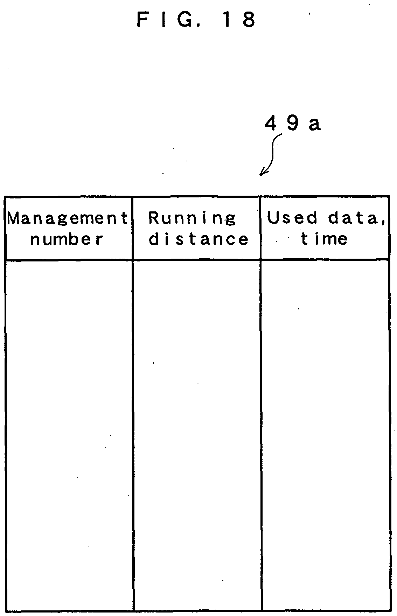

Fig. 18 shows a management table 49a of each tip holder. Data indicating a used date and time and a running distance as well as a management number characteristic of each tip holder is held in the management table.

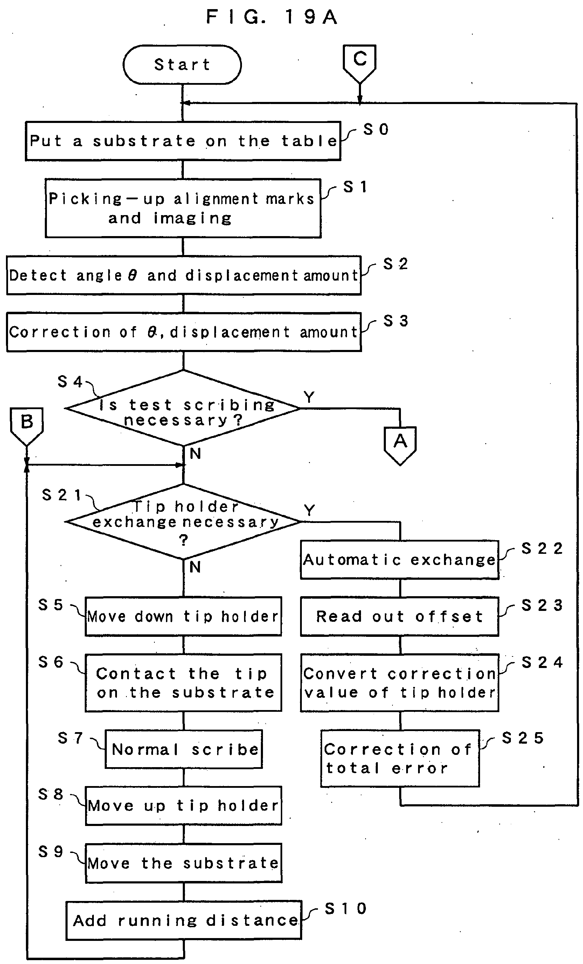

An operation according to the present embodiment will be described referring to flowcharts of Figs. 19A, 19B, 20, and 21. When the multi-head mounted scribing device 1 is to start scribing, the device 1 performs processes from steps S0 to S3 similarly to Fig 5A showing the conventional example described above. Next, in step S4, the scribing device 1 determines whether it is necessary to perform a test scribing. If it is necessary to perform the test scribing, the scribing device 1 goes to step S5' and performs almost similar process to that according to the conventional example stated above. This process will be described below.

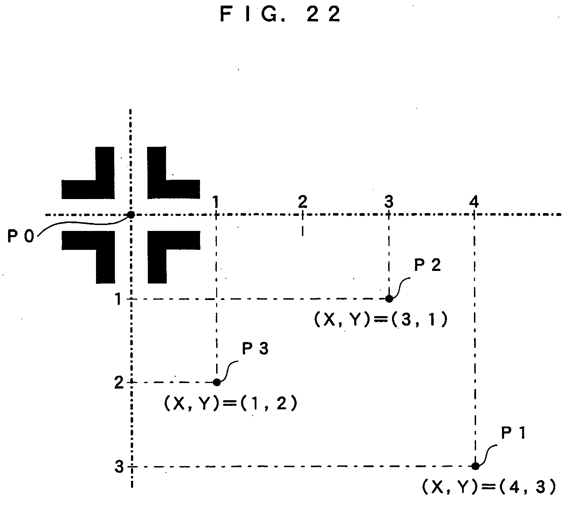

If a newly manufactured multi-head mounted scribing device is used or if one old tip holder is exchanged and a newly attaching the scribing head 50 or a holder joint 20 to the scribing device 1 is used, it is necessary to make adjustment first as follows so that an origin position and a running direction of the driver of the scribing device 1 accurately coincide with a starting position and a formation direction at and in which each tip 14 starts forming scribe lines on the substrate, respectively. If the test scribing is performed after exchanging the scribing head 50 or holder joint 20, an operator mounts a dummy substrate on the table in advance. It is assumed herein that X=-1 and Y=-2, for example, are input as a correction value of a certain tip holder. If this scribing device is used for the first time, an offset value of the tip holder is assumed as X=0 and Y=0. Fig. 22 shows the relationship between an alignment mark attached to a glass substrate or the like serving as a scribing target and an actual cut position of the tip holder. Providing that a central point of the alignment mark is a central coordinate P0, if the scribing head 50 or holder joint 20 has no offset, the scribing device 1 can start scribing the scribing target from the central coordinate P0 by making a correction to cancel an offset of the tip holder 10.

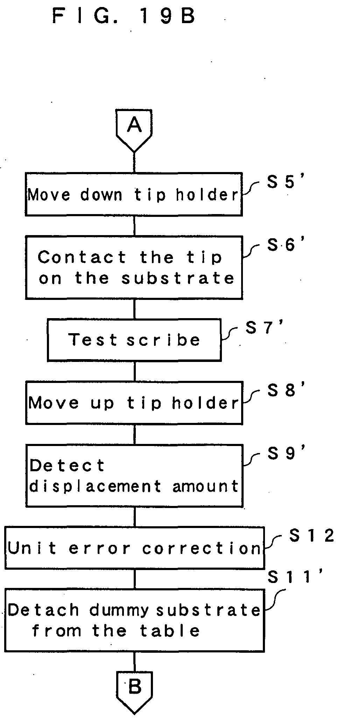

However, the scribing device 1 cannot start scribing the scribing target from the central position P0 because of presence of electrical and mechanical errors. Due to this, the scribing device 1 goes to steps S5' and S6' in Fig. 19B from step S4 via a branch point "A". The operator moves down the tip holder serving as an adjustment target and abuts the tip on the dummy substrate. The dummy substrate is subjected to the test scribing (S7'), then in step S8', the operator moves up the tip holder and measures a cut starting position. It is assumed herein that a tip cut starting position (X, Y) is a position P2 (X, Y)=(3, 1) as shown in Fig. 22. This position can be measured using the CCD camera 108. By this measurement, an inherent offset (error) of the unit including the scribing head 50 and the holder joint 20 is confirmed when the scribing device 1 starts scribing the scribing target using the tip holder without an offset.

Accordingly, the operator measures a displacement amount from the position P2 at which the cut starting position is next measured to the central coordinate (step S9'). Since this displacement amount corresponds to a value to be cancelled as an offset, the operator inputs a correction value to cancel the error of the unit using this displacement amount (step S12). In this case, the unit correction value (second correction value) to cancel this offset is X=-3 and Y=-1. Next, the operator detaches the dummy substrate from the table (step S11').

After finishing this process or if the test scribing is unnecessary, the multi-head mounted scribing device 1 determines whether it is necessary to exchange the tip holder 130 in step S21. In this determination, if the running distance of the tip in use held in the management table 14 exceeds a predetermined distance, the scribing device 1 determines that it is necessary to exchange the tip holder 130. Further, if scribing characteristics of the tip 14 differ from those for the scribing target substrate, it is necessary to exchange the tip holder.

The tip holder 10 is attached to the holder joint 20 as shown in Fig. 13, and the holder joint 20 is attached to the scribing head 50 as shown in Fig. 14. Due to this, if one of these is exchanged, a displacement between an electric origin and the scribing starting point occurs. Causes of this displacement (offset) include a component accuracy error, assembly error and the like. The scribing head 50 and the holder joint 20 are exchanged less frequently, so that these errors can be assumed as fixed errors of the unit. As for the tip holder, the tip holder 10 is exchanged per se whenever the tip is worn away and performance of the tip is deteriorated. It is, therefore, necessary to frequently correct a value of the tip holder 10. In the present embodiment, therefore, an offset value characteristic of each tip holder 10 is measured in advance at the time of shipment of the tip holder 10 and this offset value (first offset value) is recorded in the tip holder 10 per se as described later. If it is necessary to exchange the tip holder 10, the tip holder 10 is automatically exchanged using the robot 33 (step S22). If the tip holder 10 is automatically exchanged, the scribing device goes to step S23, in which the scribing device 10 reads an offset value of the new tip holder 10 using the code reader 32. The offset value is converted into correction data by converting a sign (step S24).

The controller 42 adds up the unit correction value and the correction value of the tip holder for X and Y separately as a total correction value in step S25. In the above-stated example, the correction process ends by setting the total correction value to X=-3+(-1)=-4 and Y=-1+(-2)=-3.

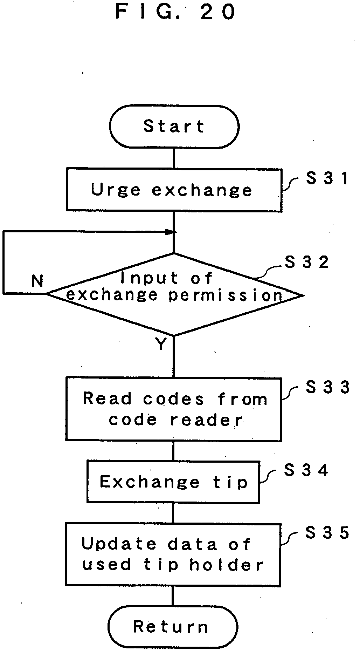

An automatic-exchanging process routine in step S22 will be described referring to Fig. 20. When the automatic-exchanging process starts, the scribing device 10 displays an indication for urging the operator to exchange the tip holder via the monitor 48. The scribing device 1 waits for the operator to input an exchanging permission to the scribing device 1 (step S32). If the operator permits exchange, the scribing device 1 goes to step S33, and the code reader 32 reads two-dimensional codes of the tip holders held in the tip stocker 31 and searches a necessary tip holder. If the necessary tip holder is found, the original tip holder is taken out from the scribing head 50 and returned to the tip stocker 31. In addition, the desired tip holder held in the tip stocker 31 is inserted into the scribing head 50, thereby exchanging the tip by the new tip (S34). The scribing device 1 updates data such as the running distance on the tip that has been used (S35). Thereafter, the scribing device 1 goes to step S23 stated above. In the present embodiment, the scribing device 1 requests the operator to permit exchange of the tip holder in step S32. Alternatively, the scribing device 1 may automatically exchange the tip holder when the running distance excess predetermined distance without displaying such an indication.

Providing that the tip is moved downward without inputting the correction data on the tip holder 10 and correcting the characteristic error of the unit, the tip is moved down to the position P1 (X, Y)=(4, 3) shown in Fig. 22. If only the fixed error of the unit is corrected, the tip is moved down to a position P3 (X, Y)=(1, 2) shown in Fig. 22. Considering these, the scribing device 1 adds up the unit correction value and the correction data on the tip holder. By doing so, in normal scribing in and after step S5 shown in Fig. 19A, the scribing device 10 can start scribing the scribing target from the central coordinate P0. In the normal scribing in and after step S5, the scribing device 1 detects the running distance of each tip used in scribing and adds the running distance data on the tip held in the management table 49a in step S10 when the scribing device moves up the tip holder 10.

Thereafter, when a new brittle material-based substrate is to be scribed, the scribing device can scribe the new substrate by executing steps S5 to S10 after executing steps S0 to S3 in the flowchart shown in Fig. 19A. Namely, after the correction of the offset of the scribing head once, it suffices to detect a displacement amount by which the brittle material-based substrate is displaced from a normal positioning position on the table and to execute a correction process once even if the substrate is changed.

Next, if it is necessary to automatically exchange the tip holder 10 after this initial correction, the scribing device goes to steps S1 to S4 and S21 to S22 to automatically exchange the tip holder as shown in Fig. 19A. In step S23, an offset value recorded in a new tip holder 10 is read. In step S24, the scribing device converts the read offset value of the new tip holder 10 into correction data. Thereafter, in step S25, the scribing device adds the correction value of the tip holder to the unit correction value already set in the scribing device to obtain a total correction value. Only by doing so, all corrections are completed without executing the test scribing.

Therefore, during actual scribing after the correction process, the scribing device 1 executes steps S5 to S10 subsequent to steps S1 to S3 shown in Fig. 19A, thereby making it possible to perform normal scribing. Namely, there is no need for the operator to mount the dummy substrate on the table, experimentally form a scribe line on the dummy substrate, and execute the correction process (steps S5' to S11') including correcting both a displacement in the positioning position and that in the direction of the substrate and canceling the offset to follow the attachment offset of the tip holder, as the conventional technique. The correction operation can be greatly reduced.

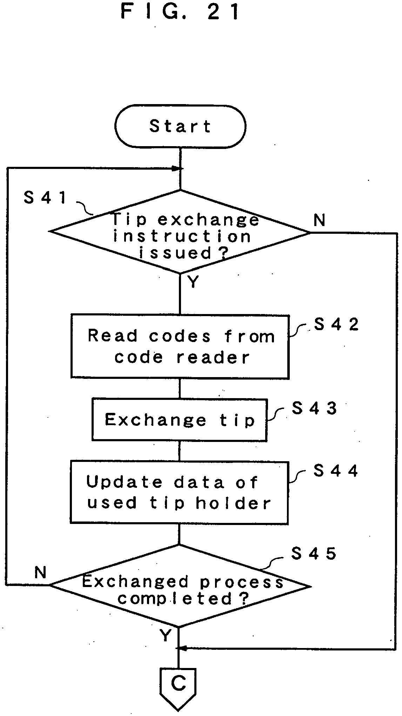

Furthermore, a process performed when the tip holder is exchanged at the time of starting using the scribing device 1 will be described referring to Fig. 21. In this case, in step S41, the scribing device checks whether a tip exchanging instruction is issued. If a tip exchanging instruction is issued, the scribing device reads the two-dimensional code using the code reader 32 and searches a designated tip holder in step S42. The scribing device attaches the indicated tip holder to the scribing head (S43). As for the tip holders already attached to the respective scribing heads, the scribing device updates data on the tip holders on the management table 49a (S44). The scribing device 1 checks whether all exchanging processes are completed (S45). If all exchanging processes are not completed, the process returns to step S41 and repeats the same process. If all exchanging processes are completed, the process goes to step S0, and the scribing device executes the above-stated process.

Measurement of the characteristic offset of each tip holder made at the time of shipment will be described. In this case, a scribing starting position of the tip of the tip holder is confirmed using a device for which the unit error is 0 or that for which the unit error is known. Offset data is obtained based on the scribing starting position.

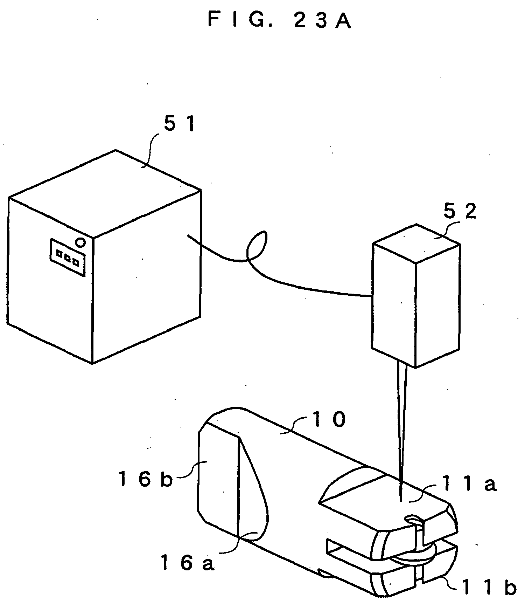

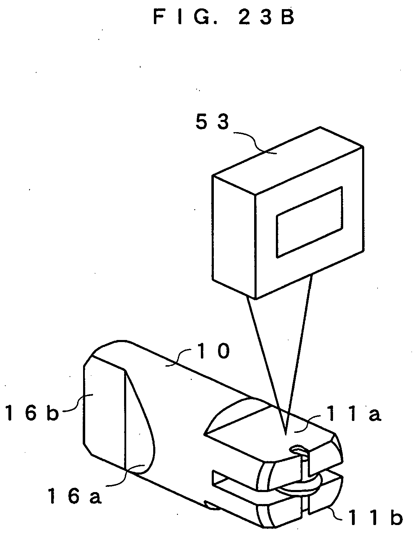

A method of recording this offset data will be described. In the present embodiment, the code is recorded on the flat portion 11a or 11b of the tip holder 10 as shown in Figs. 23A and 23B. While this code may be recoded using a one-dimensional code such as a barcode, the code is preferably a two-dimensional code because of a small recording area. If the code is the two-dimensional code, more information can be recorded at a narrower area than that of the one-dimensional code. The two-dimensional code also includes a data restoring function, and even if the two-dimensional code is stained or a part of data is damaged, the stained or damaged data can be restored to original data and the original data can be read by a read sensor. Figs. 23A and 23B typically show a status of writing and reading the two-dimensional code to and from the tip holder 10, respectively. In Fig. 23A, a controller 51 of a laser marker sets data to be recorded to form a pattern of the two-dimensional code. The data to be recorded is assumed as a two-dimensional code indicating a type of the tip and offset data measured in advance. A head part 52 directly prints the two-dimensional code on the flat portion 11a or 11b of the tip holder 10. Figs. 9 and 10 show the two-dimensional code 17 printed on the flat portion 11a in this way. If the tip holder is exchanged to exchange the tip by a new tip, a reader 53 reads the two-dimensional code before using the new tip holder as shown in Fig. 23B. By doing so, the type of the tip can be checked from the read data. Further, the offset value is converted into the correction value, thereby automating the adjustment operation following exchanging of the tip holder as already described.

Although the two-dimensional code is directly printed on the tip holder 10 in the present embodiment, a label on which the two-dimensional code is printed may be bonded onto the tip holder 10. Furthermore, the two-dimensional code is printed on the flat portion 11a or 11b of the tip holder in the present embodiment, the two-dimensional code may be recorded on the inclined portion 16a or flat portion 16b or even on a surface of the cylindrical portion of the tip holder.

Although the type of the tip and the offset data are recorded as the two-dimensional code in the present embodiment, a date of manufacture, a lot and the like of the tip holder as well as these pieces of data can be recorded as the two-dimensional code. Furthermore, as a recorder that records the pattern of the two-dimensional code, a recorder other than the laser marker may be used. Moreover, as the data reader, a wireless handy reader can be used.

Although the characteristic data of the tip holder is recorded as the two-dimensional code in the present embodiment, a close contact data carrier or the like may be used as this recording medium. In this case, the data carrier is attached to the flat portion 16b or the like of the tip holder and a read-write unit including data read and write functions is arranged in a portion of the holder joint, which portion is opposed to the data carrier. By doing so, to read data, it suffices to write and read the code and to read the code without using the recorder, the read sensor and the like.

Although the offset value is recorded on the tip holder as the two-dimensional code in the present embodiment, data for canceling the offset value may be recorded on the tip holder in place of the offset value, the correction value for cancelling this offset value may be input to the scribing device, and the scribing device may make correction.

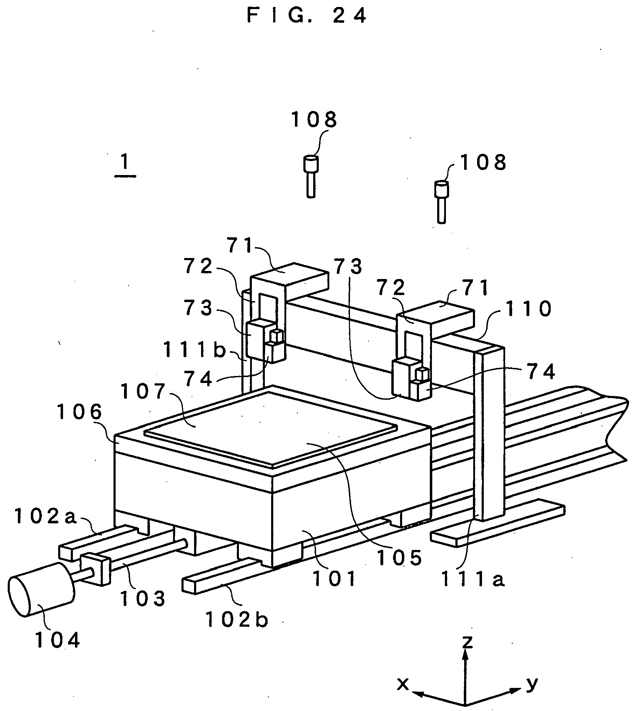

An embodiment 2 of the present invention will next be described. A multi-head mounted scribing device according to the present embodiment is a scribing device in which a table moves only in a y-axis direction without rotating and in which each scribing head moves in an x-axis direction. Fig. 24 is a perspective view of a multi-head mounted scribing device mounting therein a plurality of multi-heads according to the present embodiment, and identical parts to those according to the embodiment 1 stated above are denoted by identical reference numerals, respectively and are not described in detail. In the present embodiment, the scribing device 1 does not include a motor 105, a table 106 serves as an upper surface of a moving carriage 101 as it is, and a brittle material-based substrate 107 is arranged on the table 106. A plurality of, two in the present embodiment, linear sliders 71 are provided on a bridge 110 to be movable in the x-axis direction. Each linear slider 71 holds a slide head 73 via a connecting plate 72 in a vertical direction. The slide head 73 is used to attach a scribing head 74 to one of left and right sides of the slide head 73. The other constituent elements are the same as those of the scribing device 1 according to the embodiment 1.

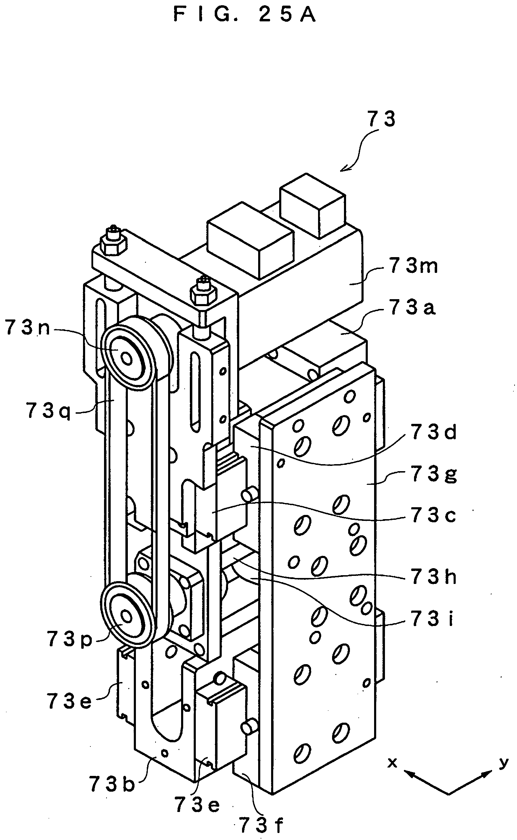

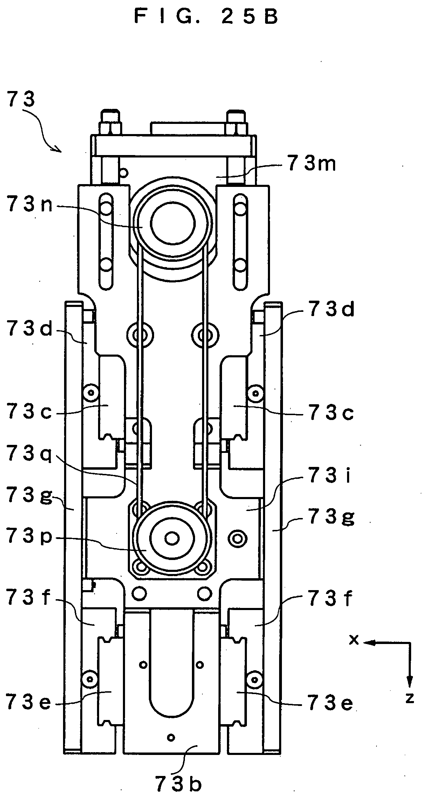

The slide head 73 includes a shift mechanism shifting the scribing head 74 in the y-axis direction. This shift mechanism constitutes a part of a relative mover. The scribing head will next be described in detail referring to Figs. 25A to 25C. Fig. 25A is a perspective view of one of the slide heads 73 provided on the connecting plate 72, and Fig. 25B is a front view of the slide head 73. In this slide head 73, an upper block part 73a and a lower block part 73b are arranged with an appropriate distance kept therebetween vertically. The upper block part 73a and the lower block part 73b simultaneously slide in parallel to a positive or negative direction of a y-axis. Two slide guides 73c extending in a horizontal state along the y-axis direction are provided on both sides of the upper block part 73a in the x-axis direction that is a slide direction of the slider 71, respectively. Upper guide blocks 73d are slidably provided on the slide guides 73c, respectively. Two slide guides 73e extending in a horizontal state along the y-axis direction are provided on both sides of the lower block part 73b in the x-axis direction that is the slide direction, respectively. Lower guide blocks 73f are slidably provided on the slide guides 73e, respectively.

As shown in Fig. 25B, attachment plates 73g are attached to the upper guide block 73d and lower guide block 73f provided on the vertical both sides of the slide head 73, respectively. A scribing head 74 is attached to one of the attachment plates 73g of the slide head 73.

A ball screw 73h is arranged between the upper block part 73a and lower block part 73b along the y direction, and a slide block 73i is mated with this ball screw 73h. The slide block 73i is attached integrally to each attachment plate 73g.

A servo motor 73m is further provided above the upper block part 73a. The servo motor 73m can made normal and reverse rotations, a rotary shaft protrudes in a horizontal state in a -y direction, and a timing pulley 73n is attached integrally to a tip end portion of the rotary shaft. A driven timing pulley 73p attached to a tip end portion of the ball screw 73h is held rotatably below the timing pulley 73n. A timing belt 73q is wound around both the timing pulleys 73n and 73p to be movable circumferentially.

Upon rotation of the servo motor 73m, the timing belt 73q transmits torque from the upper timing pulley 73n to the lower timing pulley 73p, whereby the ball screw 73h attached integrally to the lower timing pulley 73p rotates. As the ball screw 73h rotates, the slide block 731 slides along the y direction and each attachment plate 73g slides along the y direction, accordingly. It is thereby possible to slide the scribing heads 74 attached to the respective attachment plates 73g along the y direction.

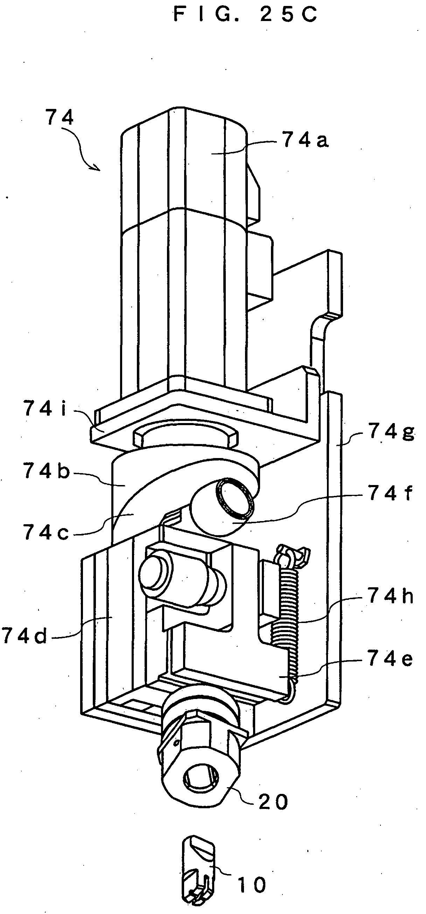

Fig. 25C is a perspective view of the scribing head 74. A servo motor 74a of the scribing head 74 is attached to one of the attachment plates 73g provided on the slide head 73. The servo motor 74a is attached to the attachment plate 73g via a mounting plate 74i attached to the attachment plate 74g and an attachment plate 74g in an inverted state in which a rotary shaft of the servo motor 74a extends downwards perpendicularly from an opening portion of the mounting plate 74i. A cylindrical cam 74b is attached to the rotary shaft of the servo motor 74a so as to rotate integrally with the rotary shaft. A lower surface of the cylindrical cam 74b is a cam surface 74c inclined from a horizontal state.

The scribing head 74 also includes a linear bearing 74d in a lower portion, and the linear bearing 74d holds a holder member 74e vertically slidably. A cam follower 74f abutting on the cam surface 74c of the cylindrical cam 74b is provided integrally with the holder member 74e. The cam follower 74f is roller-shaped to be rotatable. An elastic body such as a coil spring 74h is provided between the holder member 74e and the attachment plate 74g so as to urge the holder member 74e upward against the attachment plate 74g. The coil spring 74h urges the holder member 74e upward, thereby pressure-contacting the cam follower 74f with the cam surface 74c.

A holder joint 20 is held on a lower end portion of the holder member 74e similarly to the embodiment 1. A tip holder 10 is provided on a lower end portion of the holder joint 20 similarly to the embodiment 1.

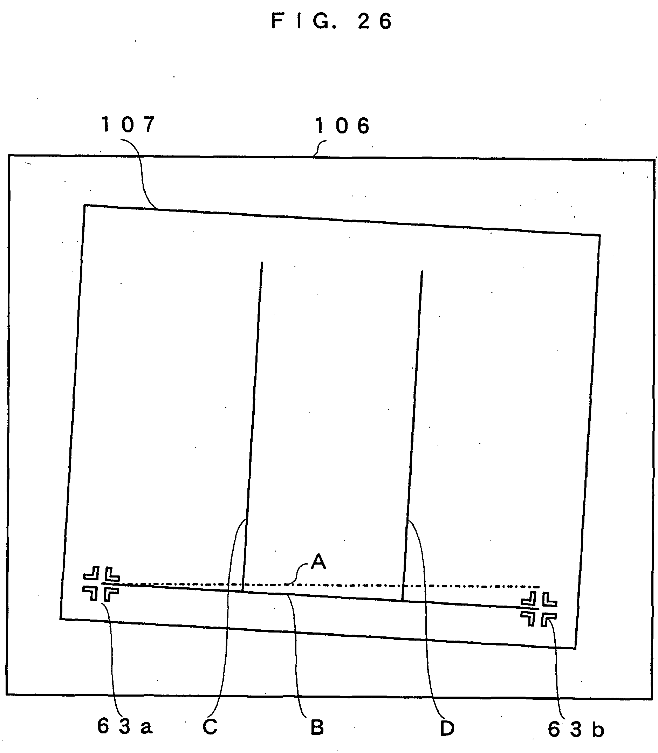

The multi-head mounted scribing device according to the embodiment 2 configured as stated above makes corrections without rotating the table itself differently from the embodiment 1. For example, as shown in Fig. 26, if the brittle material-based substrate 107 is disposed on the table 106 in a tilted state, a tip of a tip holder of one of the scribing heads is set to be able to scribe the brittle material-based substrate 107 from an alignment mark 63a similarly to the embodiment 1. In that case, a position of the other scribing head is moved using the shift mechanism in the y-axis direction. Thereafter, if a normal correction process is performed, the two scribing heads can move along on a line B and two scribe lines can be formed. By doing so, if the scribing device is to scribe the brittle material-based substrate 107 simultaneously using the two scribing heads, the scribing device can start scribing the brittle material-based substrate 107 using each scribing head from position on the line B. By a similar linear interpolation method to the conventional technique, an angle offset is cancelled, whereby the scribing device can scribe the brittle material-based substrate 107 in a perpendicular direction to the line B as indicated by lines C and D.

Moreover, a scribing device having a pair of scribing heads mounted therein vertically can simultaneously scribe both upper and lower surfaces of a panel substrate obtained by laminating two brittle material-based substrates. This scribing device can adopts tip holders similar to those adopted by the scribing device 1. Even a scribing device mounting scribing heads configured to move both in x-axis and y-axis directions and to rotatably hold tip holders in an xy plane so as to make scribe lines curved can easily correct scribing starting positions in short time after exchange of tip holders if employing the tip holders according to the present invention.

### INDUSTRIAL APPLICABILITY

The present invention relates to a scribing device forming scribe lines on a brittle material-based substrate, wherein a tip holder automatic-exchanging system is used. Since each tip holder holds offset data on the tip holder as a code, correction data can be easily set to the scribing device by reading the code and tip exchange can be automated. Therefore, the present invention can be widely applied to a step of forming scribing lines on the brittle material-based substrate.

## Claims

1. A multi-head mounted scribing device (1) mounting therein a plurality of scribing heads (50, 74), comprising:
installation means (106) on which a brittle material-based substrate (107) is installed;
a plurality of scribing heads (50, 74) provided to face the brittle material-based substrate (107) on said installation means (106);
a holder joint (20) provided on a tip end of each of said scribing heads (50, 74); and
a relative mover (44a, 44b, 45) moving each of said scribing heads (50, 74) and said brittle material-based substrate (107) relatively in a plane along a plane of the brittle material-based substrate (107),
**characterized by**
a tip holder (10) detachably attached to said holder joint (20) at one end thereof, including an attachment (16) which is formed by cutting one surface of said tip holder (10), and a wheel tip (14) for scribe line formation, rotatably attached at other end thereof the tip holder (10), and including code recording offset data (17) for scribing and a characteristic management number, said attachment (16) including an inclined portion (16a);
wherein the relative mover (44a, 44b, 45) is capable of relatively moving each of said scribing heads (50, 74) at least in one of x-axis and y-axis directions based on the offset data (17) held by said tip holder (10) before scribing, thereby correcting an offset of each of said scribing heads,
wherein said holder joint (20) comprises:
a circular opening (23) which is formed in a holder (22) of the holder joint (20);
a magnet (24) buried inside said circular opening (23); and
a parallel pin (25) perpendicular to the central axis of said holder joint(20); and
said tip holder (10) is inserted into said circular opening (23) of said holder joint (20) and attracted by said magnet (24), and is provided at a position where said parallel pin (25) contacts with said inclined portion (16a), said tip holder (10) is exchanged without detaching said wheel tip (14).

2. The multi-head mounted scribing device according to claim 1,
wherein said relative mover includes a mover (45) moving said installation means (46) in the y-axis direction; and a mover (44a, 44b) moving each of said scribing heads in the x-axis and y-axis directions.

3. The multi-head mounted scribing device according to claim 1,
wherein said relative mover moves said installation means (106) in the x-axis and y-axis directions.

4. The multi-head mounted scribing device according to claim 1,
wherein said relative mover includes a mover (45) moving said installation means (106) in the y-axis direction; and a mover moving each of said scribing heads in the x-axis direction.

5. The multi-head mounted scribing device according to claim 1,
wherein said relative mover further includes a rotator (46) rotating said installation means (106) in the plane of the brittle material-based substrate.

6. The multi-head mounted scribing device according to claim 4,
wherein said relative mover further includes a rotator (46) rotating said installation means (106) in a plane of the brittle material-based substrate.

7. The multi-head mounted scribing device according to claim 1,
wherein said code is a two-dimensional code.

8. The multi-head mounted scribing device according to claim 1,
wherein said code includes data indicating a characteristic identification number and a type of the wheel tip (14).

9. A tip holder automatic-exchanging system used for a multi-head scribing device and automatically exchanging a tip holder, comprising
the multi-head scribing device according to any of claims 1 to 8; and
wherein said tip holder automatic-exchanging system comprises:
a tip stocker (31) holding a plurality of exchangeable tip holders (10);
a code reader (32) reading the code recorded in each of the tip holders (10) held by said tip stocker (31);
a tip exchanging robot (33) attaching a desired tip holder (10) to the holder joint (20) of said multi-head scribing device based on the code read by said code reader (32), and returning the tip holder (10) attached to the holder joint (20) of said multi-head scribing device to said tip stocker (31); and
a controller (42) holding the characteristic management number and management data on each of the plurality of tip holders (10), selecting one of the tip holders (10) held by said tip stocker, and attaching the selected tip holder (10) to the holder joint (20) of said scribing device via said tip exchanging robot (33) according to a scribing target.

10. The tip holder automatic-exchanging system according to claim 9,
wherein the management data provided in said controller holds data including a running distance of each of the wheel tips (14).

11. The tip holder automatic-exchanging system according to claim 10,
wherein said controller exchanges the tip holder (20) by another tip holder (20) when the running distance of the wheel tip (14) of the tip holder exceeds a predetermined value.

## Patentansprüche

1. Mehrkopfritzvorrichtung (1), in der eine Mehrzahl Ritzköpfe (50, 74) montiert sind, mit:
einem Installationsmittel (106), auf dem auf einem spröden Material basierendes Substrat (107) installiert ist;
einer Mehrzahl Ritzköpfe (50, 74), die bereitgestellt sind, zu dem auf dem spröden Material basierendes Substrat (107) auf dem Installationsmittel (106) gerichtet zu sein;
ein Haltergelenk (20), das an einer Spitze von jedem der Ritzköpfe (50, 74) bereitgestellt ist; und
einem Relativbeweger (44a, 44b, 45), der jeden der Ritzköpfe (50, 74) und das auf dem spröden Material basierendes Substrat (107) relativ in einer Ebene entlang einer Ebene des auf dem spröden Material basierenden Substrats (107) bewegt,
**gekennzeichnet durch**
einen Spitzenhalter (10), der abnehmbar an dem Haltergelenk (20) an einem Ende davon angebracht ist, mit einem Zusatzteil (16), das durch Schneiden von einer Oberfläche des Spitzenhalters (10) ausgebildet ist, und einem Rad (14) für eine Ritzlinienausbildung, das drehbar an dem anderen Ende davon des Spitzenhalters (10) angebracht ist, und mit einem Versatzdaten (17) aufzeichnenden Code zum Ritzen und einer charakteristischen Verwaltungszahl, wobei das Zusatzteil (16) einen abgeschrägten Abschnitt (16a) hat;
wobei der Relativbeweger (44a, 44b, 45) in der Lage ist, jeden der Ritzköpfe (50, 74) zumindest in einer von x-Achsen-und-y-Achsenrichtungen ausgehend von den Versetzdaten (17), die **durch** den Spitzenhalter (10) gehalten sind, vor dem Ritzen relativ zu bewegen, und dabei einen Versatz von jedem der Ritzköpfe zu korrigieren,
wobei das Haltergelenk (20) umfasst:
eine kreisförmige Öffnung (23), die in einem Halter (22) des Haltergelenks (20) ausgebildet ist;
einen Magneten (24), der innerhalb der kreisförmigen Öffnung (23) versenkt ist; und
einen Parallelstift (25) der rechtwinklig zu der Mittelachse des Haltergelenks (20); und
den Spitzenhalter (10) in die kreisförmige Öffnung (23) des Haltergelenks (20) eingefügt und **durch** den Magneten (24) angezogen ist, und an einer Position bereitgestellt ist, an der der Parallelstift (25) den abgeschrägten Abschnitt (16a) berührt, wobei der Spitzenhalter (10) ohne Abnehmen des Rads (14) ausgetauscht wird.

2. Mehrkopfritzvorrichtung nach Anspruch 1,
wobei der Relativbeweger einen Beweger (45) hat, der das Installationsmittel (46) in der y-Achsenrichtung bewegt; und einen Beweger (44a, 44b), der jeden der Ritzköpfe in der x-Achsen-und-y-Achsenrichtung bewegt.

3. Mehrkopfritzvorrichtung nach Anspruch 1,
wobei der Relativbeweger das Installationsmittel (106) in der x-Achsen-und-y-Achsenrichtung bewegt.

4. Mehrkopfritzvorrichtung nach Anspruch 1,
wobei der Relativbeweger einen Beweger (45) hat, der das Installationsmittel (106) in der y-Achsenrichtung bewegt; und einen Beweger, der jedem der Ritzköpfe in der x-Achsenrichtung bewegt.

5. Mehrkopfritzvorrichtung nach Anspruch 1,
wobei der Relativbeweger außerdem einen Rotator (46) hat, der das Installationsmittel (106) in der Ebene des auf dem spröden Material basierenden Substrats dreht.

6. Mehrkopfritzvorrichtung nach Anspruch 4,
wobei der Relativbeweger außerdem einen Rotator (46) hat, der das Installationsmittel (106) in einer Ebene des auf dem spröden Material basierenden Substrats dreht.

7. Mehrkopfritzvorrichtung nach Anspruch 1,
wobei der Code ein zweidimensionaler Code ist.

8. Mehrkopfritzvorrichtung nach Anspruch 1,
wobei der Code Daten hat, die eine charakteristische Identifizierungsnummer und eine Art des Rads (14) anzeigen.

9. Automatisches Spitzenhalteraustauschsystem, das für eine Mehrkopfritzvorrichtung verwendet wird und automatisch eine Spitzenhalteraustauschkammer mit
der Mehrkopfritzvorrichtung nach einem der Ansprüche 1 bis 8; und
wobei das automatische Spitzenhalteraustauschsystem umfasst:
einen Spitzenstapler (31), der eine Mehrzahl austauschbarer Spitzenhalter (10) hält;
einen Codeleser (32), der den in jedem der Spitzenhalter (10) durch den Spitzenstapler (31) gehaltenen Code liest;
einen Spitzenaustauschroboter (33), der einen gewünschten Spitzenhalter (10) zu dem Haltergelenk (20) der Mehrkopfritzvorrichtung ausgehend von dem durch den Codeleser (32) gelesenen Code anbringt, um den Spitzenhalter (10), der an dem Haltergelenk (20) der Mehrkopfritzvorrichtung angebracht ist, zu dem Spitzenstapler (31) zurückführt; und
einer Steuerung (42), welche die charakteristische Verwaltungszahl und Verwaltungsdaten von jedem der Mehrzahl der Spitzenhalter (10) hält, einen der durch den Spitzenstapler gehaltenen Spitzenhalter (10) auswählt, und den ausgewählten Spitzenhalter (10) an dem Haltergelenk (20) der Ritzvorrichtung über den Spitzenaustauschroboter (33) gemäß einem Ritzziel anbringt.

10. Automatisches Spitzenhalteraustauschsystem nach Anspruch 9,
wobei die in der Steuerung bereitgestellten Verwaltungsdaten Daten mit einem Laufweg von jedem Rad (14) halten.

11. Automatisches Spitzenhalteraustauschsystem nach Anspruch 10,
wobei die Steuerung den Spitzenhalter (20) durch einen anderen Spitzenhalter (20) austauscht, wenn der Laufweg des Rads (14) des Spitzenhalters einen vorbestimmten Wert überschreitet.

## Revendications

1. Dispositif de traçage (1) monté sur plusieurs têtes, dans lequel est montée une pluralité de têtes de traçage (50, 74), comprenant :
des moyens d'installation (106) sur lesquels un substrat à base de matériau cassant (107) est installé ;
une pluralité de têtes de traçage (50, 74) prévues pour faire face au substrat à base de matériau cassant (107) sur lesdits moyens d'installation (106) ;
un joint de support (20) prévu sur une extrémité de pointe desdites têtes de traçage (50, 74) ; et
un mécanisme relatif (44a, 44b, 45) déplaçant chacune desdites têtes de traçage (50, 74) et ledit substrat à base de matériau cassant (107) relativement dans un plan le long d'un plan du substrat à base de matériau cassant (107),
**caractérisé par**
un support de pointe (10) fixé de manière détachable audit joint de support (20) au niveau de l'une de ses extrémités, comprenant une fixation (16) qui est formée en coupant une surface dudit support de pointe (10) et une pointe de molette (14) pour la formation d'un chemin de découpe, fixée de manière rotative, au niveau de son autre extrémité, sur le support de pointe (10), et comprenant des données de décalage d'enregistrement de code (17) pour le traçage et un numéro de gestion caractéristique, ladite fixation (16) comprenant une partie inclinée (16a) ;
dans lequel le mécanisme relatif (44a, 44b, 45) est capable de déplacer relativement chacune desdites têtes de traçage (50, 74) au moins dans l'une parmi les directions d'axe x et d'axe y en fonction des données de décalage (17) maintenues par ledit support de pointe (10) avant le traçage, corrigeant ainsi une décalage de chacune desdites têtes de traçage,
dans lequel ledit joint de support (20) comprend :
une ouverture circulaire (23) qui est formée dans un support (22) du joint de support (20) ;
un aimant (24) enfoncé à l'intérieur de ladite ouverture circulaire (23) ; et
une broche parallèle (25) perpendiculaire à l'axe central dudit joint de support (20) ; et
ledit support de pointe (10) est inséré dans ladite ouverture circulaire (23) dudit joint de support (20) et attiré par ledit aimant (24), et est prévu dans une position dans laquelle ladite broche parallèle (25) est en contact avec ladite partie inclinée (16a), ledit support de pointe (10) est échangé sans détacher ladite pointe de molette (14).

2. Dispositif de traçage monté sur plusieurs têtes selon la revendication 1,
dans lequel ledit mécanisme relatif comprend un mécanisme (45) déplaçant lesdits moyens d'installation (46) dans la direction d'axe y ; et un mécanisme (44a, 44b) déplaçant chacune desdites têtes de traçage dans les directions d'axe x et d'axe y.

3. Dispositif de traçage monté sur plusieurs têtes selon la revendication 1,
dans lequel ledit mécanisme relatif déplace lesdits moyens d'installation (106) dans les directions d'axe x et d'axe y.

4. Dispositif de traçage monté sur plusieurs têtes selon la revendication 1,
dans lequel ledit mécanisme relatif comprend un mécanisme (45) déplaçant lesdits moyens d'installation (106) dans la direction d'axe y ; et un mécanisme déplaçant chacune desdites têtes de traçage dans la direction d'axe x.

5. Dispositif use traçage monté sur plusieurs têtes selon la revendication 1,
dans lequel ledit mécanisme relatif comprend en outre un rotateur (46) faisant tourner lesdits moyens d'installation (106) dans le plan du substrat à base de matériau cassant.

6. Dispositif de traçage monté sur plusieurs têtes selon la revendication 4,
dans lequel ledit mécanisme relatif comprend en outre un rotateur (46) faisant tourner lesdits moyens d'installation (106) dans un plan du substrat à base de matériau cassant.

7. Dispositif de traçage monté sur plusieurs têtes selon la revendication 1,
dans lequel ledit code est un code à deux dimensions.

8. Dispositif de traçage monté sur plusieurs têtes selon la revendication 1,
dans lequel ledit code comprend des données indiquant un numéro d'identification caractéristique et un type de la pointe de molette (14).

9. Système d'échange automatique de support de pointe utilisé pour un dispositif de traçage à plusieurs têtes et échanger automatiquement un support de pointe, comprenant :
le dispositif de traçage à plusieurs têtes selon l'une quelconque des revendications 1 à 8 ; et
dans lequel ledit système d'échange automatique de support de pointe comprend :
un dispositif de stockage de pointe (31) contenant une pluralité de supports de pointe échangeables (10) ;
un lecteur de code (32) lisant le code enregistré dans chacun des supports de pointe (10) contenus par ledit dispositif de stockage de pointe (31) ;
un robot d'échange de pointe (33) fixant un support de pointe (10) souhaité sur le joint de support (20) dudit dispositif de traçage à plusieurs têtes en fonction du code lu par ledit lecteur de code (32), et ramenant le support de pointe (10) fixé sur le joint de support (20) dudit dispositif de traçage à plusieurs têtes, audit dispositif de stockage de pointe (31) ; et
un organe de commande (42) contenant le numéro de gestion caractéristique et les données de gestion sur chacun de la pluralité de supports de pointe (10), sélectionnant l'un des supports de pointe (10) contenus par ledit dispositif de stockage de pointe, et fixant le support de pointe (10) sélectionné sur le joint de support (20) dudit dispositif de traçage via ledit robot d'échange de pointe (33) selon une cible de traçage.

10. Système d'échange automatique de support de pointe selon la revendication 9,
dans lequel les données de gestion prévues dans ledit organe de commande contiennent des données comprenant une distance parcourue de chacune desdites pointes de molette (14).

11. Système d'échange automatique de support de pointe selon la revendication 10,
dans lequel ledit organe de commande échange le support de pointe (20) par un autre support de pointe (20) lorsque la distance parcourue de la pointe de molette (14) du support de pointe dépasse une valeur prédéterminée.
